# EUROPEAN PATENT APPLICATION

(11) **EP 2 463 711 A1**
(43) Date of publication of application: **13.06.2012**
(21) Application number: 10806553.3
(22) Date of filing: 06.08.2010
(51) Int. Cl.: G02F 1/1368, G02F 1/1337

(54) **LIQUID CRYSTAL DISPLAY DEVICE**

(30) Priority: 07.08.2009 JP 2009185215
(71) Applicant: Sharp Kabushiki Kaisha, Osaka-shi, Osaka 545-8522 (JP)
(72) Inventor: ITOH, Ryohki, Osaka-shi, Osaka 545-8522 (JP); YOSHIDA, Masahiro, Osaka-shi, Osaka 545-8522 (JP); YAMADA, Takaharu, Osaka-shi, Osaka 545-8522 (JP); HISADA, Yuhko, Osaka-shi, Osaka 545-8522 (JP); HORIUCHI, Satoshi, Osaka-shi, Osaka 545-8522 (JP)
(74) Representative: Müller - Hoffmann & Partner
(86) International application number: PCT/JP2010/063382
(87) International publication number: WO 2011/016554

(57) **Abstract**

In an MVA liquid crystal display device of the present invention, each pixel includes at least one electrode (21), the first electrode (21) has a first corner portion with a first edge parallel to a row direction and a second edge parallel to a column direction, and a first substrate further includes an electrode layer (e.g., a storage capacitor counter electrode **(18a))** which overlaps at least part of the first edge and at least part of the second edge of the first corner portion. According to the present invention, it is possible to provide an MVA liquid crystal display device capable of suppressing the degradation in display quality caused by the disturbance in alignment of liquid crystal molecules in the vicinity of the edge of the first electrode.

## Description

### TECHNICAL FIELD

The present invention relates to a liquid crystal display device, and more particularly to an MVA liquid crystal display device.

### BACKGROUND ART

MVA (Multidomain Vertical Alignment) liquid crystal display devices have wider viewing angle performance than TN liquid crystal display devices, so that MVA liquid crystal display devices are widely used as liquid crystal display devices for TV and other applications (see Patent Documents 1 and 2, for example). The entire contents disclosed in Patent Documents 1 and 2 are incorporated by reference herein.

In an MVA liquid crystal display device, on the sides facing a vertical alignment liquid crystal layer of a pair of substrates which are opposed with the liquid crystal layer interposed therebetween, domain regulating structures (also referred to as orientation regulating structures) are disposed, so as to form a plurality of liquid crystal domains having different orientations (tilt directions) of directors. As the domain regulating structure, a slit (an opening portion) provided in an electrode, or a dielectric projection (a rib) formed on the side facing the liquid crystal layer of the electrode is used.

Typically, each of the pair of substrates is provided with linear domain regulating structures extending in two directions which are mutually orthogonal. When they are viewed from a direction perpendicular to the substrates, the domain regulating structure formed on one substrate and the domain regulating structure formed on the other substrate are arranged in parallel and alternately. As a result, when a voltage is applied across a liquid crystal layer of an arbitrary pixel, four kinds of domains in which liquid crystal molecules are tilted in directions mutually different by about 90° (also referred to as director directions of liquid crystal domains) are formed between the linear domain regulating means. Typically, four liquid crystal domains with their director azimuth angles of 45° with respect to polarization axes (transmission axes) of a pair of polarization plates disposed in a crossed-Nichole manner are formed. When 0° of azimuth angle is assumed as a direction of polarization axis of one polarization plate (e.g. a horizontal direction of a display plane (3 o'clock direction of a dial plate)), and the anticlockwise direction is assumed to be a positive direction, the azimuth angles of the directors of the four liquid crystal domains are 45°, 135°, 225°, and 315°. Hereinafter, the definition of the azimuth angle is based on the above-described definition, unless otherwise noted.

The term "pixel" in the present specification indicates the minimum unit of the display performed by a liquid crystal display device. In the case of a color display device, the term "pixel" indicates the minimum unit for displaying each primary color (typically R, G, or B), and is sometimes referred to as "dot."

Generally, pixels are arranged in matrix with rows and columns. Herein, the row direction means a horizontal direction of a display plane (the azimuth angle of 0° or 180°), and the column direction means a vertical direction of the display plane (the azimuth angle of 90° or 270°). A pixel includes a pixel electrode, a liquid crystal layer, and a counter electrode (a common electrode) which is opposed to the pixel electrode with the liquid crystal layer interposed therebetween. The pixel electrode has an edge (a side) extending in the row direction and an edge extending in the column direction. In order to form the above-mentioned four liquid crystal domains, the linear domain regulating structures extending in the two directions which are mutually orthogonal included in the MVA liquid crystal display device are provided so as to extend in the directions of the azimuth angles of 45° (225°) and 135° (315°), for example. That is, the linear domain regulating structures extending in the two directions which are mutually orthogonal provided on the side of the counter electrode intersect with the edge extending in the row direction of the pixel electrode or the edge extending in the column direction thereof.

When a potential difference is formed between the pixel electrode and the counter electrode, an oblique electric field (a fringe field) is formed in the vicinity of the edge of the pixel electrode. The oblique electric field formed along the edge of the pixel electrode acts so as to tilt the liquid crystal molecules in the direction orthogonal to the edge of the pixel electrode. Accordingly, in the vicinity of a position in which the domain regulating structure provided on the side of the counter electrode (or the extension line thereof) intersects with the edge extending in the row direction or in the column direction of the pixel electrode, the oblique electric field formed in the vicinity of the edge of the pixel electrode acts so as to disturb the alignment of liquid crystal molecules regulated by the domain regulating structure. It is understood that if the alignment of liquid crystal molecules is disturbed, the display quality is degraded.

In order to suppress the disturbance in alignment of liquid crystal molecules in the vicinity of the position in which the domain regulating structure provided on the side of the counter electrode (or its extension line) intersects with the edge of the pixel electrode extending in the row direction or in the column direction, Patent Document 1 discloses a configuration in which a linear auxiliary structure is provided in the position opposed to an edge portion of the pixel electrode in which the disturbance in alignment occurs. The linear auxiliary structure extends in parallel to the corresponding edge portion. The auxiliary structure may be provided on the inside of a pixel or on the outside of the pixel. The auxiliary structure is, for example, a slit formed in the counter electrode, or a dielectric projection formed on the side of the liquid crystal layer of the counter electrode. The employed auxiliary structure is the same as the domain regulating structure provided on the side of the counter electrode. That is, in the case where the domain regulating structure is a slit formed in the counter electrode, a slit is adopted as the auxiliary structure. In the case where the domain regulating structure is a dielectric projection formed on the side of the liquid crystal layer of the counter electrode, a dielectric projection is adopted as the auxiliary structure.

However, the portion in which the auxiliary structure (a slit or a dielectric projection) is formed does not contribute to the display, so that there is a problem that if at least part of the auxiliary structure exists in the pixel, the transmittance is deteriorated. The disturbance in alignment of liquid crystal molecules in the vicinity of the edge of the pixel electrode can be suppressed by means of the auxiliary structure, but the orientation of liquid crystal molecules in the vicinity of the edge is different from the orientation of directors in the domain defined by the domain regulating structure, so that the loss of transmittance is unavoidable. In addition, if a dielectric projection is used as the auxiliary structure, the arrangement of a columnar spacer (also referred to as a photo spacer) for defining the thickness of the liquid crystal layer (a cell gap) is limited, so that the degree of freedom of design is disadvantageously degraded.

In recent years, in order to improve the dependency on viewing angle of γ characteristic of the MVA liquid crystal display device, in Patent Document 3, the applicants of the present invention disclose a liquid crystal display device and a driving method in which one pixel is divided into a plurality of sub-pixels having different degrees of brightness, thereby improving the dependency on viewing angle of the γ characteristic. Especially, it is possible to improve the dependency on viewing angle of the γ characteristic in which display luminance of lower gradation sequence is higher (whitish) than a predetermined luminance. In the present specification, such display or driving may sometimes be referred to as area coverage modulation display, are coverage modulation driving, multi-pixel display, multi-pixel driving, or the like. The entire contents of Patent Document 3 are incorporated by reference herein.

Patent Document 3 discloses a liquid crystal display device in which a storage capacitor is provided for a plurality of sub-pixels in one pixel, a storage capacitor counter electrode for constituting the storage capacitor (connected to a CS bus line) is electrically independent for each sub-pixel, and a voltage supplied to the storage capacitor counter electrode (referred to as a storage capacitor counter voltage) is varied, thereby varying effective voltages to be applied across liquid crystal layers of the plurality of sub-pixels by utilizing capacitance split. In applications requiring wide viewing angle performance such as the application of TV, the MVA liquid crystal display device adopts multi-pixel display by way of various methods.

In the liquid crystal display device with multi-pixel structure, a pixel electrode is divided into a plurality of sub-pixel electrodes corresponding to a plurality of sub-pixels. In other words, the plurality of sub-pixel electrodes constitute one pixel electrode.

Apart from the multi-pixel structure, a plurality of sub-pixel electrodes are disposed in each pixel, in some cases. For example, for the purpose of easily restoring a short-circuit failure between a pixel electrode and a counter electrode, or for the purpose of making the short-circuit failure to be unnoticeable, a pixel electrode may be constituted by a plurality of sub-pixel electrodes. In such a case, the same voltage is supplied to the plurality of sub-pixel electrodes included in each pixel.

### CITATION LIST

### PATENT LITERATURE

Patent Document 1: Japanese Laid-Open Patent Publication No. 11-242225 (U.S. Patent No. 6724452)
Patent Document 2: Japanese Laid-Open Patent Publication No. 2000-155317 (U.S. patent No. 6879364)
Patent Document 3: Japanese Laid-Open patent Publication No. 2004-62146 (U.S. patent No. 6958791)

### SUMMARY OF INVENTION

### TECHNICAL PROBLEM

As described above, if the MVA liquid crystal display device includes the above-described auxiliary structure in order to suppress the disturbance in alignment of liquid crystal molecules in the vicinity of an edge of a pixel electrode (or a sub-pixel electrode), there arises a problem that there may occur a loss of transmittance, for example.

The present invention has been conducted so as to solve the above-mentioned problems, and the objective of the present invention is to provide an MVA liquid crystal display device in which the degradation in display quality caused by the disturbance in alignment of liquid crystal molecules in the vicinity of the edge of the pixel electrode can be suppressed without providing the above-described auxiliary structure.

### SOLUTION TO PROBLEM

The liquid crystal display device of the first invention is an MVA liquid crystal display device including a plurality of pixels arranged in a matrix of rows and columns, each of the plurality of pixels including: a first substrate; a second substrate; a vertical-alignment type liquid crystal layer disposed between the first substrate and the second substrate; at least one first electrode formed on the first substrate; a second electrode opposed to the at least one first electrode via the liquid crystal layer; a first domain regulating structure formed on the first substrate; and a second domain regulating structure formed on the second substrate, the first domain regulating structure including a slit formed in the at least one first electrode, and the second domain regulating structure being a slit formed in the second electrode or a dielectric projection formed on the liquid crystal layer side of the second electrode, the first domain regulating structure having a first linear component extending in a first direction when viewed from a direction perpendicular to the first substrate and a second linear component extending in a second direction which is different from the first direction by about 90°, and the second domain regulating structure having a third linear component extending in the first direction and a fourth linear component extending in the second direction, at least one of the first and second linear components or the third and fourth linear components being plural in number, when viewed from the direction perpendicular to the first substrate, the first linear component and the third linear component being alternately arranged, the second linear component and the fourth linear component being alternately arranged, and when a voltage is applied across the liquid crystal layer of an arbitrary pixel of the plurality of pixels, four kinds of domains of which tilting directions of liquid crystal molecules are mutually different by about 90° being formed between the first linear component and the third linear component and between the second linear component and the fourth linear component, wherein the first direction and the second direction are directions intersecting with the row direction and the column direction, and in the at least one first electrode, when viewed from the direction perpendicular to the first substrate, a portion sandwiched between a first portion and a second portion which is adjacent to the first portion of the at least one first electrode has an extended portion protruding in the row direction, the first portion being a portion in which an edge of the at least one first electrode intersects with the slit or a portion in which the edge of the at least one first electrode intersects with an extended line of a slit closest to the edge, and the second portion being a portion in which the edge of the at least one first electrode intersects with the second domain regulating structure or a portion in which the at least one first electrode intersects with an extended line of a second domain regulating structure closest to the edge.

Herein, the first electrode is fundamentally defined by an outer edge of a conductive layer constituting the electrode, and is not related to the potential (in the case where a slit continued from the outer edge (a long and narrow strip-like cutout) is formed in the first electrode, the slit is considered to be included in the first electrode). For example, in the case where outer edges of two conductive layers (ITO layers, for example) are mutually independent when they are viewed from the side of the liquid crystal layer, the two conductive layers constitute two first electrodes even when substantially the same voltage is supplied across the two conductive layers via a drain of a single TFT. It is understood that the number of TFTs connected to the conductive layer has no relation to the number of first electrodes. For example, the first electrode is a pixel electrode, and in the case where each pixel includes a plurality of sub-pixel electrodes in a liquid crystal display device with multi-pixel structure or the like, each sub-pixel electrode corresponds to a first electrode.

In one embodiment, the second substrate further includes a black matrix, and the end in the row direction of the extended portion overlaps the black matrix when viewed from the direction perpendicular to the first substrate.

In one embodiment, the extended portion included in the at least one first electrode has an edge parallel to a direction in which the slit intersecting with the edge of the first portion or the slit having the extended line intersecting with the edge of the first portion extends.

In one embodiment, the edge of the extended portion included in the at least one first electrode and the edge of the slit are continuous.

In one embodiment, the extended portion has an edge parallel to the row direction or the column direction.

In one embodiment, the at least one first electrode has a notch portion in an edge opposed to the extended portion of the at least one pixel electrode of a pixel adjacent in the row direction.

In one embodiment, the extended portion exists in the vicinity of a corner portion of a pixel.

In one embodiment, the extended portion exists in the vicinity of the middle in the column direction of a pixel, and the at least one first electrode has a notch portion of an isosceles triangular shape with a line parallel to the row direction in the middle of the column direction as an axis of symmetry.

In one embodiment, the notch portion has an edge parallel to the first direction or the second direction.

In one embodiment, the at least one first electrode has an edge parallel to the first direction or the second direction.

In one embodiment, the at least one first electrode has a plurality of slits arranged in one line in the first direction or a plurality of slits arranged in one line in the second direction.

In one embodiment, a gap between the plurality of slits arranged in one line is less than 8 µm.

In one embodiment, the at least one first electrode has a first corner portion including a first edge parallel to the row direction and a second edge parallel to the column direction, and the first substrate further includes an electrode layer which overlaps at least part of the first edge and at least part of the second edge of the first corner portion. In other words, the first invention and the second invention which will be described below may be combined.

In one embodiment, a storage capacitor corresponding to each of the plurality of pixels is further included, wherein the storage capacitor includes a storage capacitor electrode electrically connected to the at least one first electrode and a storage capacitor counter electrode opposed to the storage capacitor electrode via an insulating layer, the electrode layer being the storage capacitor counter electrode or the storage capacitor electrode.

In one embodiment, an interlayer insulating layer formed on the storage capacitor electrode is further included, wherein the at least one first electrode is connected to the storage capacitor electrode in a contact hole formed through the interlayer insulating layer on the storage capacitor electrode.

In one embodiment, the electrode layer overlaps part of the first domain regulating structure or the second domain regulating structure.

In one embodiment, the first substrate has a CS bus line for each row, the at least one first electrode includes two first electrodes having a boundary on the CS bus line and arranged in upper and lower positions along the column direction, and at least one of the two first electrodes has the first corner portion.

In one embodiment, two storage capacitors corresponding to each of the plurality of pixels are included, each of the two storage capacitors having a storage capacitor electrode electrically connected to corresponding one of the two first electrodes and a storage capacitor counter electrode opposed to the storage capacitor electrode via an insulating layer, the electrode layer being the storage capacitor counter electrode or the storage capacitor electrode, wherein a lower edge of the upper one of the two first electrodes has a first protruding portion protruding downwards, an upper edge of the lower one of the two first electrodes has a second protruding portion protruding upwards, and a lower edge of the first protruding portion and an upper edge of the second protruding portion overlap the CS bus line or the storage capacitor counter electrode.

In one embodiment, one of the two first electrodes has only one of the plurality of slits arranged in one line along the first direction or the plurality of slits arranged in one line along the second direction, and the other one of the two first electrodes has only the other one of the plurality of slits arranged in one line along the first direction or the plurality of slits arranged in the one line along the second direction.

In one embodiment, the second domain regulating structure has the third linear component and the fourth linear component of which the respective edges parallel to the row direction are opposed on the CS bus line or the storage capacitor counter electrode, and a gap between the edge of the third linear component and the edge of the fourth linear component is less than 8 µm.

In one embodiment, the at least one first electrode includes three or four first electrodes, and the three or four first electrodes include the two first electrodes.

In one embodiment, three or four storage capacitors corresponding to each of the plurality of pixels are included, the three or four storage capacitors having a storage capacitor electrode electrically connected to corresponding one of the three or four first electrodes and a storage capacitor counter electrode opposed to the storage capacitor electrode via an insulating layer, wherein the electrode layer is the storage capacitor electrode electrically connected to corresponding one of the two first electrodes or the storage capacitor counter electrode opposed to the storage capacitor electrode via the insulating layer.

In one embodiment, one of the two first electrodes has only one of the plurality of slits arranged in one line along the first direction or the plurality of slits arranged in one line along the second direction, and the other one of the two first electrodes has only the other one of the plurality of slits arranged in one line along the first direction or the plurality of slits arranged in one line along the second direction.

In one embodiment, when viewed from a direction perpendicular to the first substrate, the storage capacitor electrode has a U shape with a concave portion in an up-down direction or a left-right direction. Herein, the "up-down direction" viewed from the direction perpendicular to the first substrate means the vertical direction of the display plane. The "up direction" means the azimuth angle of 90° (12 o'clock direction of a dial plate), and the "down direction" means the azimuth angle of 270° (6 o'clock direction of the dial plate). The "left-right direction" means the horizontal direction of the display plane. The "right direction" means the azimuth angle of 0° (3 o'clock direction of the dial plate), and the "left direction" means the azimuth angle of 180° (9 o'clock direction of the dial plate).

In one embodiment, in a position on the second substrate corresponding to the first edge and the second edge of the first corner portion of the at least one first electrode, the slit formed in the second electrode or the dielectric projection formed on the side of the liquid crystal layer of the second electrode is not formed.

The liquid crystal display device of the second invention is an MVA liquid crystal display device including a plurality of pixels arranged in a matrix of rows and columns, each of the plurality of pixels including: a first substrate; a second substrate; a vertical-alignment type liquid crystal layer disposed between the first substrate and the second substrate; at least one first electrode formed in the first substrate; a second electrode opposed to the at least one first electrode via the liquid crystal layer; a first domain regulating structure formed in the first substrate; and a second domain regulating structure formed in the second substrate, the first domain regulating structure being a slit formed in the at least one first electrode, and the second domain regulating structure being a slit formed in the second electrode or a dielectric projection formed on the liquid crystal layer side of the second electrode, the first domain regulating structure having a first linear component extending in a first direction when viewed from a direction perpendicular to the first substrate and a second linear component extending in a second direction different from the first direction by about 90°, and the second domain regulating structure having a third linear component extending in the first direction and a fourth linear component extending in the second direction, the number of at least one of the first and second linear components or the third and fourth linear components being plural, when viewed from a normal direction of the first substrate, the first linear component and the third linear component being alternately arranged, the second linear component and the fourth linear component being alternately arranged, and when a voltage is applied across the liquid crystal layer of an arbitrary pixel of the plurality of pixels, four kinds of domains of which tilting directions of liquid crystal molecules are mutually different by about 90° being formed between the first linear component and the third linear component and between the second linear component and the fourth linear component, wherein the first direction and the second direction are directions intersecting with the row direction and the column direction, and the at least one first electrode has a first corner portion including a first edge parallel to the row direction and a second edge parallel to the column direction, and the first substrate further includes an electrode layer which overlaps at least part of the first edge and at least part of the second edge of the first corner portion.

In one embodiment, a storage capacitor corresponding to each of the plurality of pixels is included, wherein the storage capacitor includes a storage capacitor electrode electrically connected to the at least one first electrode and a storage capacitor counter electrode opposed to the storage capacitor electrode via an insulating layer, the electrode layer being the storage capacitor counter electrode or the storage capacitor electrode.

In one embodiment, an interlayer insulating layer formed on the storage capacitor electrode is further included, wherein the at least one first electrode is connected to the storage capacitor electrode in a contact hole formed through the interlayer insulating layer on the storage capacitor electrode.

In one embodiment, the electrode layer overlaps part of the first domain regulating structure or the second domain regulating structure.

In one embodiment, the at least one first electrode has an edge parallel to the first direction or the second direction.

In one embodiment, the at least one first electrode has a plurality of slits arranged in one line in the first direction or a plurality of slits arranged in one line in the second direction.

In one embodiment, a gap between the plurality of slits arranged in one line is less than 8 µm.

In one embodiment, the first substrate has a CS bus line for each row, the at least one first electrode includes two first electrodes having a boundary on the CS bus line and arranged in upper and lower positions along the column direction, and at least one of the two first electrodes has the first corner portion.

In one embodiment, two storage capacitors corresponding to each of the plurality of pixels are included, each of the two storage capacitors having a storage capacitor electrode electrically connected to corresponding one of the two first electrodes and a storage capacitor counter electrode opposed to the storage capacitor electrode via an insulating layer, the electrode layer being the storage capacitor counter electrode or the storage capacitor electrode, wherein a lower edge of the upper one of the two first electrodes has a first protruding portion protruding downwards, an upper edge of the lower one of the two first electrodes has a second protruding portion protruding upwards, and a lower edge of the first protruding portion and an upper edge of the second protruding portion overlap the CS bus line or the storage capacitor counter electrode.

In one embodiment, one of the two first electrodes has only one of the plurality of slits arranged in one line along the first direction or the plurality of slits arranged in one line along the second direction, and the other one of the two first electrodes has only the other one of the plurality of slits arranged in one line along the first direction or the plurality of slits arranged in the one line along the second direction.

In one embodiment, the second domain regulating structure has the third linear component and the fourth linear component of which the respective edges parallel to the row direction are opposed on the CS bus line or the storage capacitor counter electrode, and a gap between the edge of the third linear component and the edge of the fourth linear component is less than 8 µm.

In one embodiment, when viewed from a normal direction of the first substrate, the storage capacitor electrode has a U shape with a concave portion in an up-down direction or a left-right direction.

In one embodiment, in a position on the second substrate corresponding to the first edge and the second edge of the first corner portion of the at least one first electrode, the slit formed in the second electrode or the dielectric projection formed on the side of the liquid crystal layer of the second electrode is not formed.

### ADVANTAGEOUS EFFECTS OF INVENTION

According to the first invention or the second invention, it is possible to provide an MVA liquid crystal display device in which the degradation in display quality caused by the disturbance in alignment of liquid crystal molecules in the vicinity of the edge of the pixel electrode can be suppressed without providing the above-described auxiliary structure. By appropriately combining both of the first invention and the second invention, the above-mentioned effect can be enhanced.

### BRIEF DESCRIPTION OF DRAWINGS

[FIG. **1**] FIG. **1** is a plan view showing the configuration of an LCD **100A** in one embodiment of the present invention.
[FIG. **2**] FIG. **2** is a plan view showing the configuration of an LCD **100B** in one embodiment of the present invention.
[FIG. **3**] FIG. **3** is a transmittance distribution map obtained by simulation in the condition where a voltage for displaying white is applied across a liquid crystal layer of a pixel in the LCD **100B.**
[FIG. **4**] **(a)** and **(b)** are plan views showing the configuration of an LCD **100C** in one embodiment of the present invention, in which **(a)** is a view in which a dielectric projection and a columnar space are depicted by hatching, and **(b)** is a view in which a gate metal layer is depicted by hatching.
[FIG. **5**] FIG. **5** is a transmittance distribution map obtained by simulation in the condition where a voltage for displaying white is applied across a liquid crystal layer of a pixel in the LCD **100C.**
[FIG. **6**] FIG. **6** is a view showing a sectional configuration of a portion in which a contact hole **17b** is formed in the LCD **100C,** and a sectional view taken along a line VI-VI' in FIG. **4(b)**.
[FIG. **7**] FIG. **7** is a view showing another sectional configuration of the portion in which the contact hole is formed, and a sectional view corresponding to the line VI-VI' in FIG. **4(b)****.**
[FIG. **8**] FIG. **8** is a plan view showing the configuration of an LCD **100D** in one embodiment of the present invention.
[FIG. **9**] FIG. **9** is a transmittance distribution map obtained by simulation in the condition where a voltage for displaying white is applied across a liquid crystal layer of a pixel in the LCD **100D.**
[FIG. **10**] FIG. **10** is a plan view showing the configuration of an LCD **100E** in one embodiment of the present invention.
[FIG. **11]** FIG. **11** is a transmittance distribution map obtained by simulation in the condition where a voltage for displaying white is applied across a liquid crystal layer of a pixel in the LCD **100E.**

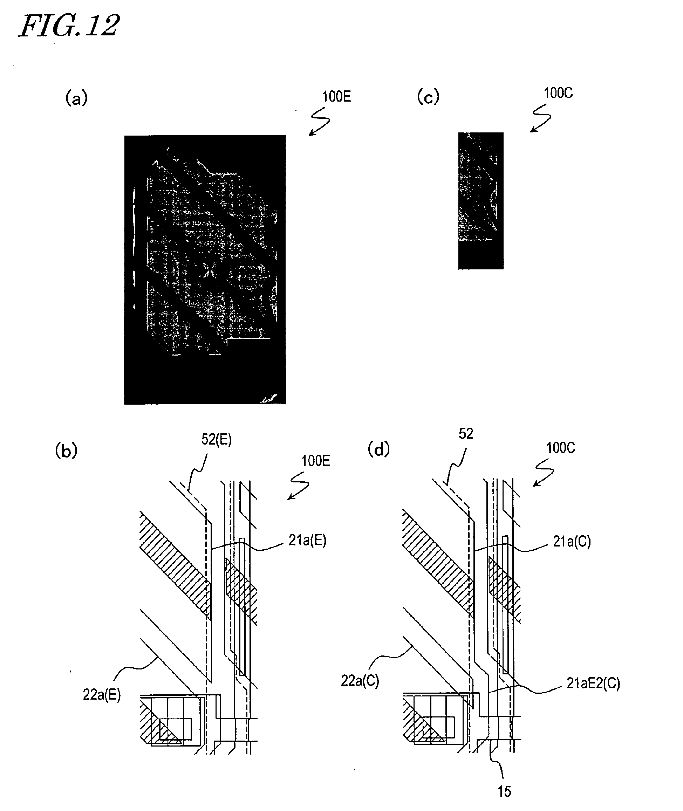

[FIG. **12**] **(a)** is a transmittance distribution map obtained by simulation in the condition where a voltage for displaying white is applied across a liquid crystal layer of a pixel in the LCD **100E** (the upper half of the pixel), **(b)** is a plan view of a lower right portion of a first electrode **21a(E)** of the LCD **100E, (c)** is a transmittance distribution map obtained by simulation in the condition where a voltage for displaying white is applied across a liquid crystal layer of a pixel in the LCD **100C** (the upper half and lower right portion of the pixel), and **(d)** is a plan view of the lower right portion of a first electrode **21a(C)** of the LCD **100C.**
[FIG. **13**] FIG. **13** is a plan view showing the configuration of an LCD **100F** in one embodiment of the present invention.
[FIG. **14**] FIG. **14** is a view showing a sectional configuration of a portion in which a contact hole **17(F)** is formed in the LCD **100F.**
[FIG. **15**] FIG. **15** is a view showing a plane configuration of the portion in which the contact hole **17(F)** is formed in the LCD **100F.**
[FIG. **16**] **(a)** to **(d)** are plan views showing patterns of first electrodes in LCDs **100G, 100H, 100I,** and **100J** in embodiments of the present invention.
[FIG. **17**] **(a)** to **(d)** are plan views showing the configuration of an LCD **100K** in one embodiment of the present invention.
[FIG. **18**] **(a)** to **(d)** are plan views showing the configuration of an LCD **100L** in one embodiment of the present invention.

### DESCRIPTION OF EMBODIMENTS

Hereinafter, with reference to the drawings, the configurations of MVA liquid crystal display devices (hereinafter abbreviated as LCDs) in embodiments of the present invention will be described. It is understood that the present invention is not limited to the embodiments which will be exemplarily described below.

In an MVA LCD in one embodiment which will be exemplarily described below, a first substrate includes a TFT and a first electrode (a pixel electrode or a sub-pixel electrode), and a second substrate includes a second electrode (a counter electrode). A first domain regulating structure formed in the first substrate includes a slit formed in the first electrode, and a second domain regulating structure formed in the second substrate includes a dielectric projection formed on the side of a liquid crystal layer of the second electrode. As the second domain regulating structure, a slit formed in the second electrode may be used.

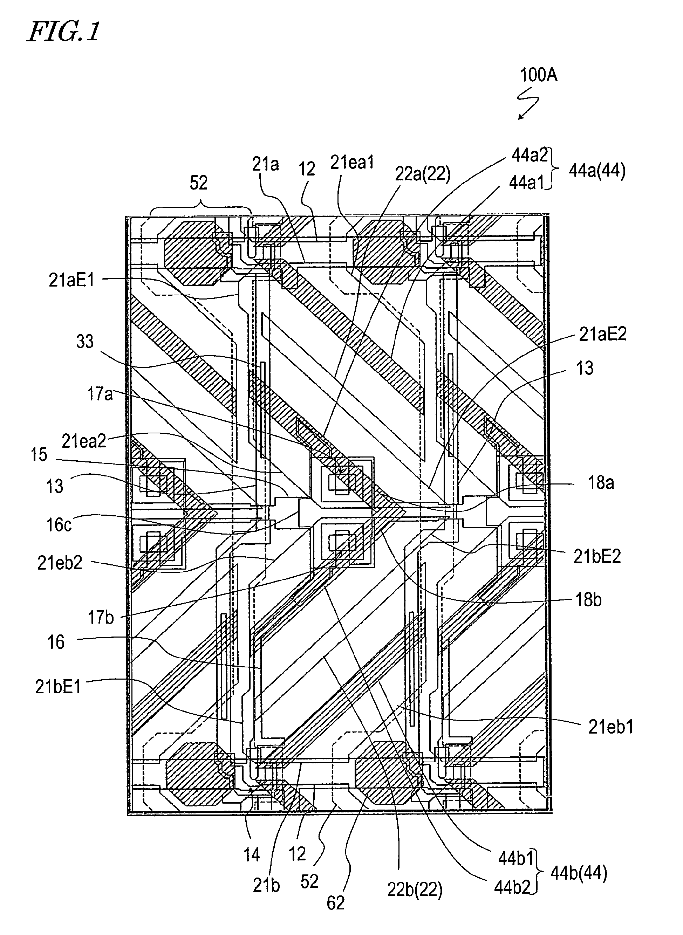

First, with reference to FIG. **1****,** the configuration of an MVA LCD **100A** in one embodiment of the first invention will be described. FIG. **1** is a plan view schematically showing an exemplary fundamental configuration of the LCD **100A** in the embodiment of the first invention. FIG. **1** shows one pixel and part of two pixels which are adjacent to the pixel in a row direction (in the horizontal direction) among a plurality of pixels arranged in a matrix included in the LCD **100A.**

The LCD **100A** includes a plurality of pixels having first electrodes (sub-pixel electrodes) **21a** and **21b** formed on a first substrate, a second electrode (a counter electrode, not shown) opposed to the first electrodes **21a** and **21b** and formed on a second electrode, and a vertical alignment liquid crystal layer (not shown) interposed between the first electrodes **21a** and **21b** and the second electrode. The second electrode is provided in common to the plurality of pixels, and formed over the entire face in FIG. **1****.**

Herein in the vertical alignment liquid crystal layer, liquid crystal molecules with negative dielectric anisotropy are aligned in a substantially vertical manner (e.g., 87° or more and 90° or less) to the planes of the first electrodes **21a, 21b,** and the second electrode. Typically, the vertical alignment liquid crystal layer can be obtained so as to provide vertical alignment films (not shown) on surfaces of the first electrodes **21a, 21b,** and the second electrode (and the dielectric projection), respectively, on the side of the liquid crystal layer.

The two first electrodes **21a** and **21b** disposed in each pixel of the LCD 100A are connected to a source bus line **13** via a single TFT **14.** The ON/OFF control of the TFT **14** is executed by a gate signal supplied from a gate bus line **12** to a gate. The first electrodes **21a** and **21b** are connected to storage capacitor electrode **16c** which is an extended portion of a drain and a drain lead-out wiring **16** of the TFT **14** in contact holes **17a** and **17b,** respectively. When the TFT **14** is turned into the ON state, a source signal voltage supplied from the source bus line **13** is supplied to the first electrodes **21a** and **21b.** The pixel structure of the LCD **100A** is not a multi-pixel structure.

Between the first electrode **21a** and the first electrode **21b** which are arranged in upper and lower positions along the column direction of pixels, a CS bus line (a storage capacitor wiring) **15** is disposed. A lower edge of the first electrode **21a** and an upper edge of the second electrode **21b** (both are parallel to the row direction) are arranged so as to overlap the CS bus line **15.** In other words, the gap between the first electrode **21a** and the first electrode **21b** is disposed on the CS bus line **15.** By adopting such a configuration, light is blocked by the CS bus line **15** in a region in which the alignment of liquid crystal molecules is disturbed, so that the display quality can be enhanced. The gap between the first electrode **21a** and the first electrode **21b** may not necessarily be positioned on the CS bus line **15.** If such a configuration is adopted, the transmittance can be improved. Storage capacitor counter electrodes **18a** and **18b** (integrally formed) as an extended portion of the CS bus line **15** constitute a storage capacitor **(CS)** together with a storage capacitor electrode **16c** which is opposed via an insulating layer. The contact holes **17a** and **17b** are formed on the storage capacitor.

The storage capacitor counter electrode **18a** extendedly disposed on the upper side in the column direction from the CS bus line **15** includes a portion extendedly disposed so as to overlap a dielectric projection **44a2.** The storage capacitor counter electrode **18b** extendedly disposed on the lower side in the column direction from the CS bus line **15** includes a portion extendedly disposed so as to overlap a dielectric projection **44b2.** Since the above-mentioned electrodes constituting the storage capacitor do not transmit light, if the electrodes are disposed in a pixel, the effective aperture (a ratio of an area through which the light actually used for the display transmits to the area of the display region) decreases. Also in the portion in which the dielectric projection **44** is formed, the transmittance of light decreases. By disposing them in an overlap manner, the loss of transmitting area in a pixel can be suppressed. It should be appreciated that the area of the electrode constituting the storage capacitor is appropriately determined in accordance with the acceptable value which is electrically designed.

A semiconductor layer **33** remains in a lower layer (on the side of the substrate) of the source bus line **13.** The semiconductor layer **33** is provided as an indicator for indicating which color the pixel is used for displaying among the three primary colors R, G, and B, for example.

A slit **22** is formed as the first domain regulating structure in the first electrodes **21a** and **21b.** The dielectric projection **44** is formed as the second domain regulating structure on the side of the liquid crystal layer of the second electrode. In FIG. **1****,** the dielectric projection **44** and a columnar spacer **62** are depicted by hatching. They are, for example, formed on the second electrode (the counter electrode) of the second substrate by using a photosensitive resin.

The slit **22** included in the first electrodes **21a** and **21b** as the first domain regulating structure has a first linear component **22a** which extends in a first direction when it is viewed from a direction perpendicular to the first substrate, and a second linear component **22b** which extends in a second direction which is different from the first direction by about 90°. The first electrode **21a** has only the first linear component **22a,** and the second electrode **21b** has only the second linear component **22b.** Herein the azimuth angle of the first direction is 135° (or 315°), and the azimuth angle of the second direction is 225° (or 45°).

The dielectric projection **44** formed on the side of the liquid crystal layer of the second electrode as the second domain regulating structure has third linear components **44a1** and **44a2 (44a)** which extend in the first direction and fourth linear components **44b1** and **44b2 (44b)** which extend in the second direction. When viewed from the direction perpendicular to the first substrate, the first linear component **22a** and the two third linear components **44a1** and **44a2** are alternately arranged, and the second linear component **22b** and the two fourth linear components **44b1** and **44b2** are alternately arranged. when a voltage is applied across the liquid crystal layer of the pixel, four kinds of domains in which liquid crystal molecules are tilted in directions mutually different by about 90° are formed between the first linear component **22a** and the third linear components **44a1** and **44a2,** and between the second linear component **22b** and the fourth linear components **44b1** and **44b2.** The first and second linear domain regulating structures exhibit their alignment regulating properties for tilting the liquid crystal molecules in the direction orthogonal to the direction in which the respective linear component extends. For this reason, the liquid crystal molecules between the linear components disposed in parallel with a predetermined space interposed therebetween are tilted substantially uniformly in the same direction.

The domain regulating structures included in the liquid crystal display device in the embodiment of the present invention exemplarily described herein are fundamentally the same as the domain regulating structures included in the LCD **100A,** so that they may sometimes be omitted in the following description. It is noted that the domain regulating structures included in the liquid crystal display device in the embodiment of the invention are not limited to those described above. For example, the second domain regulating structure may be a slit. Herein the case including one first linear component, one second linear component, two third linear components, and two fourth linear components is exemplarily descried. It is sufficient that the number of at least one of the first and second components or the third and fourth components may be plural, and the first linear component and the third linear component may be arranged alternately and the second linear component and the fourth linear component may be arranged alternately when they are viewed from the direction perpendicular to the first substrate. A notch portion (a portion without a conductive layer) including edges **21ea1** and **21ea2** in parallel to the first direction of the first electrode **21a** functions as the first domain regulating structure, and a notch portion including edges **21eb1** and **21eb2** in parallel to the second direction of the second electrode **21b** functions as the second domain regulating structure, so that it can be regarded that there are three first and second linear components, and there are two third and fourth linear components.

The first direction and the second direction in which the domain regulating structures extend are directions intersecting with the row direction (a horizontal direction of the display plane) and the column direction (a vertical direction of the display plane). When viewed from the direction perpendicular to the first substrate, as for the first electrodes **21a** and **21b,** a portion sandwiched between a first portion and a second portion has an extended portion which protrudes in the row direction. The first portion is a portion in which an edge of the first electrode **21a** or **21b** intersects with the slit **22,** or the edge of the first electrode **21a** or **21b** intersects with the extended line of the slit **22** which is the nearest to the edge. The second portion is adjacent to the first portion of the first electrode **21a** or **21b,** and the second portion is a portion in which an edge of the first electrode **21a** or **21b** intersects with the dielectric projection **44,** or a portion in which the edge of the first electrode **21a** or **21b** intersects with the extended line of the dielectric projection **44** which is the nearest to the edge.

As shown in FIG. **1****,** as for the first electrode **21a,** a portion sandwiched between a first portion in which the left edge of the first electrode **21a** intersects with the extended line of the slit **22a** and a second portion in which the left edge of the first electrode **21a** intersects with the dielectric projection **44a1** has an extended portion **21aE1** which protrudes in the row direction (on the left side in FIG. 1).

In addition, as for the first electrode **21a,** a portion sandwiched between a first portion in which a right edge of the first electrode **21a** intersects with the slit **22a** and a second portion in which a lower edge of the first electrode **21a** intersects with the dielectric projection **44a2** has an extended portion **21aE2** which protrudes in the row direction (on the right side in FIG. **1**).

Similarly, as for the first electrode **21b,** a portion sandwiched between a first portion in which the left edge of the first electrode **21b** intersects with the extended line of the slit **22b** and a second portion in which the left edge of the first electrode **21b** intersects with the dielectric projection **44b1** has an extended portion **21bE1** which protrudes in the row direction (on the left side in FIG. **1**).

In addition, as for the first electrode **21b,** a portion sandwiched between a first portion in which the right edge of the first electrode **21b** intersects with the slit **22b** and a second portion in which the upper edge of the first electrode **21b** intersects with the dielectric projection **44b2** has an extended portion **21bE2** which protrudes in the row direction (on the right side in FIG. **1**).

The extended portion **21aE1** has an edge parallel to the direction in which the slit **22a** having the extended line intersecting with the edge of the first portion extends (the first direction). The extended portion **21aE1** also has an edge parallel to the column direction.

Similarly, the extended portion **21bE1** has an edge parallel to the direction in which the slit **22b** having the extended line intersecting with the edge of the first portion extends (the second direction). The extended portion **21bE1** also has an edge parallel to the column direction.

Also, the extended portion **21aE2** has an edge parallel to the direction in which the slit **22a** intersecting with the edge of the first portion extends (the first direction), and the edge and the edge of the slit **22a** are disposed continuously. The extended portion **21aE2** also has an edge parallel to the row direction.

Similarly, the extended portion **21bE2** has an edge parallel to the direction in which the slit **22b** intersecting with the edge of the first portion extends (the second direction), and the edge and the edge of the slit **22b** are disposed continuously. The extended portion **21bE2** also has an edge parallel to the row direction.

As described above, each of the extended portions **21aE1, 21aE2, 21bE1,** and **21bE2** has an edge parallel to the direction in which the respectively corresponding slit **22a** or **22b** extends, and the edge exhibits the alignment regulating property similarly to the corresponding slit. On the other hand, each of the extended portions **21aE1, 21aE2, 21bE1,** and 21bE2 also has an edge parallel to the row direction or the column direction. Accordingly, in the extended portions **21aE1, 21aE2, 21bE1,** and **21bE2,** in their end portions in the row direction in which these edges intersect, the disturbance in alignment of liquid crystal molecules occurs.

For this reason, when viewed from the direction perpendicular to the first substrate, the ends of the extended portions **21aE1, 21aE2, 21bE1,** and **21bE2** in the row direction are arranged so as to overlap a black matrix **52** (indicated by dashed lines in FIG. 1). Accordingly, even if the alignment of liquid crystal molecules is disturbed in the end portions of the extended portions **21aE1, 21aE2, 21bE1,** and **21bE2** in the row direction, the portions are light-blocked by the black matrix **52,** so that the display is not affected adversely. The black matrix **52** is generally formed by using a metal layer or a black resin layer on a surface of the second substrate on the side of the liquid crystal layer.

Specifically, in the liquid crystal display device in the embodiment of the first invention, the extended portion protruding in the row direction is formed in the first electrode, the end of the extended portion in the row direction is arranged so as to overlap the black matrix, and the region in which the alignment of liquid crystal molecules is disturbed formed in the vicinity of the edge of the first electrode is pushed into the area light-blocked by the black matrix, so that the degradation in display quality caused by the alignment disturbance of liquid crystal molecules in the vicinity of the edge of the first electrode is suppressed.

As described above, the LCD **100A** includes four extended portions **21aE1, 21aE2, 21bE1,** and **21bE2** in each pixel. Among them, the extended portions **21aE1** and **21bE1** are disposed in the vicinity of corner portions of the pixel. Herein both of them are disposed on the corners on the left side of the pixel. Both of the extended portions **21aE2** and **21bE2** are disposed in the vicinity of the middle in the column direction on the right side of the pixel. Both of them are disposed in the vicinity of a corner portion of the first electrode **21a** or **21b.**

Among the four corner portions of the first electrode **21a,** in the vicinity of two corner portions on a diagonal line along the first direction in which the slit **22a** extends, the extended portions **21aE1** and **21aE2** are disposed. The remaining two corner portions of the first electrode **21a** positioned on the diagonal line which intersects with the above-mentioned diagonal direction have edges **21ea1** and **21ea2** parallel to the first direction. The distance between the edge **21ea1** of the upper right corner portion of the first electrode **21a** and the dielectric projection **44a1** is substantially equal to the distance between the slit **22a** and the dielectric projection **44a1.** The distance between the edge **21ea2** of the lower left corner portion of the first electrode **21a** and the dielectric projection **44a2** is substantially equal to the distance between the slit **22a** and the dielectric projection **44a2.** The edges **21ea1** and **21ea2** parallel to the first direction of the first electrode **21a** exhibit the alignment regulating property similarly to the slit **22a,** thereby acting so as to stably form liquid crystal domains together with the dielectric projection **44a1** or **44a2.**

Similarly, in the first electrode **21b,** two corner portions of the first electrode **21b** positioned in a diagonal direction which intersects with the diagonal direction as the second direction in which the slit **22b** extends have edges **21eb1** and **21eb2** parallel to the second direction. The edges **21eb1** and **21eb2** parallel to the second direction of the first electrode **21b** exhibit the alignment regulating property similarly to the slit **22b,** thereby acting so as to stably form liquid crystal domains together with the dielectric projection **44b1** or **44b2.**

Herein the edges **21ea2** and **21eb2** on the left edges of the first electrodes **21a** and **21b** constitute notch portions opposite to extended portions **21aE2** and **21bE2** disposed on right edges of first electrodes **21a** and **21b** included in a pixel adjacent to the pixel on the left side. End portions of the extended portions **21aE2** and **21bE2** of the first electrodes **21a** and **21b** included in the pixel adjacent on the left side are positioned in the notch portions. With the provision of the notch portions, the amount of projection of the extended portions **21aE2** and **21bE2** in the row direction can be increased.

The columnar spacer **62** is positioned in a region formed between the lower right edge **21eb1** of the first electrode 21b and an upper right edge **21ea1** of a first electrode **21a** in a pixel on a row which is lower by one. Among the corner portions of the first electrodes **21a** and **21b,** in corner portions in which the extended portions are not provided, edges **21ea1** and **21eb1** parallel to the respective slits **22a** or **22b** are formed, so as to form a space for providing the columnar spacer **62.** For example, if the columnar spacer **62** is disposed so as to overlap the first electrode **21a** or **21b,** liquid crystal molecules of which the alignment is regulated by the columnar spacer **62** disturb the alignment of liquid crystal molecules in the pixel, so that the display quality is sometimes degraded. For example, it is assumed that the columnar spacer **62** is formed on the counter substrate (the second substrate), and the diameter thereof is decreased toward the TFT substrate (the first substrate) from the counter electrode. In this case, liquid crystal molecules in the up direction (the 12 o'clock direction) viewed from the columnar spacer **62** in the lower right portion of FIG. **1** are tilted toward the columnar spacer **62** (directed to the 6 o'clock direction). That is, the alignment regulating property by the side face of the columnar spacer **62** acts so as to direct the liquid crystal molecules in a direction different from the direction by the alignment regulating property of the domain regulating structure **44b1** or the lower right edge **21eb1** of the first electrode **21b.** This may cause a problem of reduction in transmittance, or rough textured (uneven) display. In the LCD **100A,** the columnar spacer **62** is disposed in the region in which the first electrodes **21a** and **21b** are not formed, so that such degradation in display quality can be prevented.

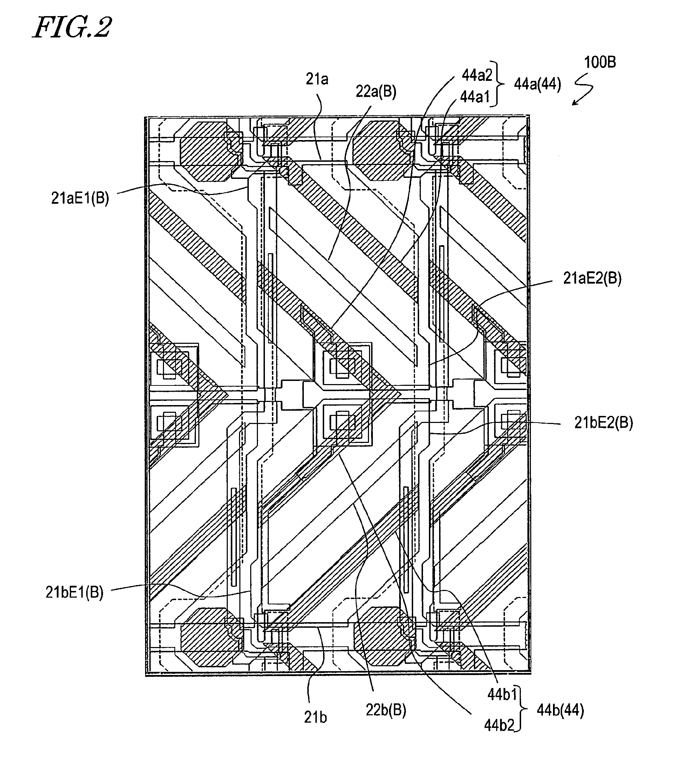

Next, with reference to FIG. **2****,** an LCD **100B** in one embodiment of the first invention will be described. In the following description, common configuring members to those in the LCD **100A** are indicated by the common reference numerals, and the description thereof may sometimes be omitted.

The LCD **100B** has two first electrodes **21a** and **21b,** similarly to the LCD **100A,** and has four extended portions **21aE1(B), 21aE2(B), 21bE1(B),** and **21bE2(B)** in a pixel.

The extended portion **21aE1(B)** disposed on the left edge of the first electrode **21a** and the extended portion **21bE1(B)** disposed on the left edge of the first electrode 21b are the same as the expended portions **21aE1** and **21bE1** in the LCD **100A,** respectively.

The LCD **100B** is different from the LCD **100A** in the configurations of the extended portions formed on the right edge of the first electrode **21a** and on the right edge of the first electrode **21b** and the slits included in the first electrodes **21a** and **21b.**

As for the first electrode **21a** of the LCD **100B,** a portion sandwiched between a first portion and a second portion has an extended portion **21aE2(B)** which protrudes in the row direction (on the right side in FIG. **2**). The first portion is a portion in which the right edge of the first electrode **21a** intersects with the extended line of slit **22a(B).** The second portion is a portion in which the lower edge of the first electrode **21a** intersects with a dielectric projection **44a2.** The extended portion **21aE2(B)** has an edge parallel to the direction in which the slit **22a(B)** having the extended line intersecting with the edge of the first portion extends (the first direction), and an edge parallel to the row direction. The slit **22a(B)** is formed in the first electrode **21a.** The slit **22a(B)** is different from the slit **22a** in the LCD **100A** in that the slit **22a(B)** and the edge of the first electrode **21a** are not continuous.

As for the first electrode **21b** of the LCD **100B,** a portion sandwiched between a first portion and a second portion has an extended portion **21bE2(B)** which protrudes in the row direction (on the right side in FIG. **2**). The first portion is a portion in which the right edge of the first electrode **21b** intersects with the extended line of a slit **22b(B).** The second portion is a portion in which the upper edge of the first electrode **21b** intersects with a dielectric projection **44b2.** The extended portion **21bE2(B)** has an edge parallel to the direction in which the slit **22b(B)** having the extended line intersecting with the edge of the first portion extends (the second direction), and an edge parallel to the row direction. The slit **22b (B)** is formed in the first electrode **21b.** The slit **22b(B)** is different from the slit **22b** of the LCD **100A** in that the slit **22b(B)** and the edge of the first electrode **21b** are not continuous.

Also in the LCD **100B,** similarly to the LCD **100A,** when viewed from the direction perpendicular to the first substrate, the ends in the row direction of the extended portions **21aE1(B), 21aE2(B), 21bE1(B),** and **21bE2(B)** are arranged so as to overlap a black matrix 52 (indicated by dashed lines in FIG. **1**). Accordingly, similarly to the LCD **100A,** the degradation in display quality caused by the alignment disturbance of liquid crystal molecules in the vicinity of the edge of the first electrode can be suppressed without providing the above-described auxiliary structure.

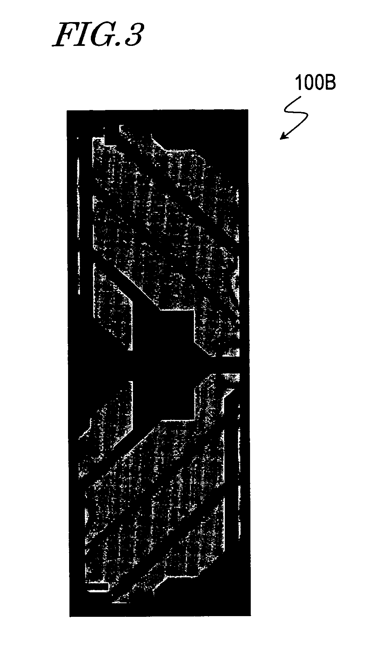

FIG. **3** shows the result of transmittance distribution obtained by simulation in the condition where a white display voltage (7.0 V) is applied across the liquid crystal layer of a pixel in the LCD **100B.** The simulation is performed by using Expert LCD (produced by DAOU XILICON Technology Co.,Ltd.). The following simulation is performed in the same way.

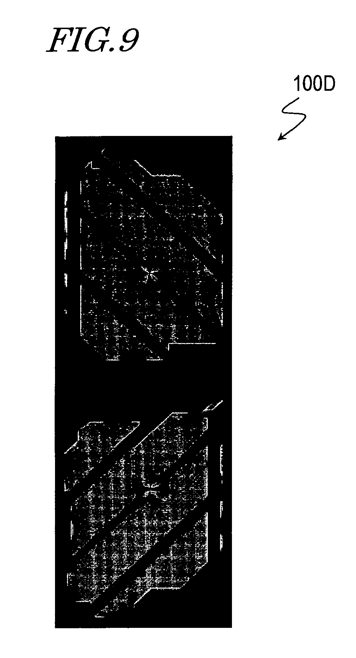

In the LCD 100B, by the provision of the extended portions **21aE1(B), 21aE2(B), 21bE1(B),** and **21bE2(B),** the region in the vicinity of the edges of the first electrodes **21a** and **21b** in which the alignment of liquid crystal molecules is disturbed is blocked by the black matrix **52.** As a result, the area of the region in which the alignment of liquid crystal molecules is disturbed is reduced. This will be described later by representing the simulation results in FIG. **9****,** FIG. **11****,** and FIG. **12****.**

However, in the LCD **100B,** as is seen from FIG. **3****,** on the right side of the center in the column direction of a pixel, i.e., in the vicinity of the lower right corner portion of the first electrode **21a** and the upper right corner portion of the first electrode **21b,** annular dark lines appear. Both of the lower right corner portion of the first electrode **21a** and the upper right corner portion of the first electrode **21b** include the edge parallel to the row direction and the edge parallel to the column direction. In addition, in the vicinity of the lower right corner portion of the first electrode **21a,** there exist the slit **22a** and the dielectric projection **44a2,** and in the vicinity of the upper right corner portion of the first electrode **21b,** there exist the slit **22b** and the dielectric projection **44b2.** Accordingly, the alignment regulating properties from various directions act on liquid crystal molecules in the vicinity of such corner portions, so that the alignment of liquid crystal molecules is disturbed and unstable. The position in which the dark line appears and the size and the shape of the dark line are varied depending on the final shape of the corner portion of each of the first electrodes **21a** and **21b.** Due to the existence of the dark line, the display quality is degraded, for example, the transmittance is lowered, or rough textured (uneven) display occurs.

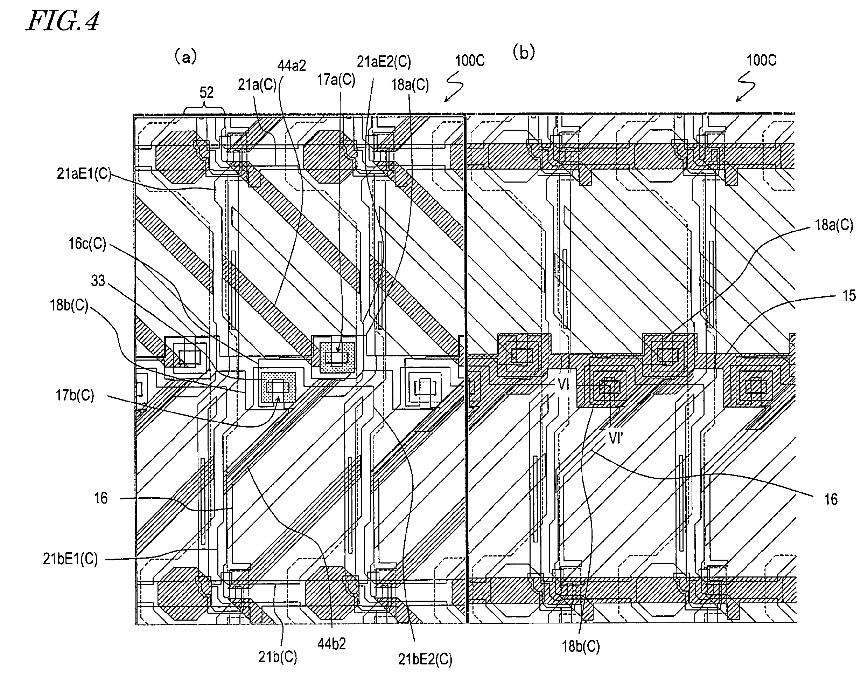

For this reason, in an LCD **100C** shown in FIG. **4(a)** and FIG. **4(b)****,** the position in which the storage capacitor counter electrode **18a** is formed is changed from the position in the LCD **100B,** so as to hide the annular dark lines shown in FIG. **3****.** The LCD **100C** is the embodiment of the first invention, and also the embodiment of the second invention.

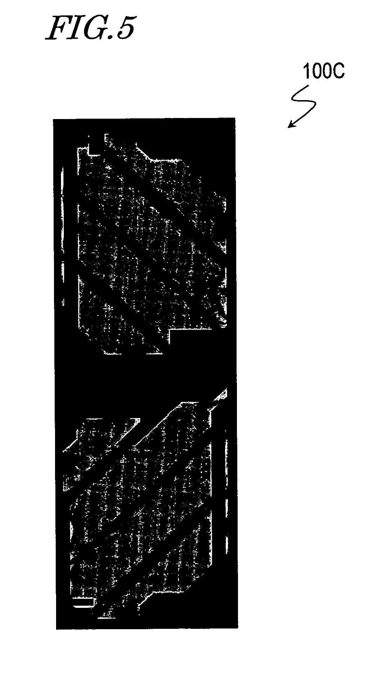

FIG. **4(a)** and FIG. **4(b)** are plan views showing the configuration of the LCD **100C.** FIG. **4(a)** is a view in which a dielectric projection and a columnar spacer are depicted by hatching. FIG. **4(b)** is a view in which a gate metal layer is depicted by hatching. FIG. **5** shows the result of transmittance distribution obtained by simulation in the condition where a white display voltage is applied across a liquid crystal layer of a pixel in the LCD **100C.**

First, refer to FIG. **5****.** As is apparent from the comparison between FIG. **5** and FIG. **3****,** the annular dark lines in the vicinity of the middle of the right edge shown in FIG. **3** are hidden in FIG. **5****.** It is understood that by adopting the configuration of LCD **100C,** the above-mentioned problem caused by the annular dark lines can be solved. Specifically, it is possible to suppress the degradation in display quality caused by the disturbance in alignment of liquid crystal molecules in the vicinity of the edge of the first electrode without providing the above-described auxiliary structure.

As shown in FIG. **4(a)** and FIG. **4(b)****,** in the LCD **100C,** the storage capacitor counter electrode **18a(C)** is formed so as to overlap the lower right corner portion of the first electrode **21a** including the edge parallel to the row direction and the edge parallel to the column direction. Specifically, the storage capacitor counter electrode **18a(C)** overlaps at least part of the edge parallel to the row direction in the above-mentioned corner portion and at least part of the edge parallel to the column direction in the above-mentioned corner portion. The storage capacitor counter electrode **18a(C)** formed as a gate metal layer and the storage capacitor electrode **16c(C)** formed as a source metal layer are generally formed by a film having light blocking effect, so that these electrode layers can be utilized as light blocking layers. Herein the example in which the storage capacitor counter electrode **18a(C)** is used as the light blocking layer is described. Alternatively, the storage capacitor electrode **16c(C)** may be used as the light blocking layer, or another electrode layer may used. If the electrode layer formed on the TFT substrate such as the storage capacitor counter electrode **18a(C)** or the storage capacitor electrode **16c(C)** is utilized, it is unnecessary to additionally form a light blocking layer. Moreover, the region which cannot essentially contribute to the display can actively be utilized as the light blocking layer, so that it is possible to suppress the reduction in effective aperture of a pixel.

Herein the gate metal layer indicates a layer including a component formed by using a metal film (including a layered film) for forming a gate bus line and a gate electrode. Similarly, the source metal layer indicates a layer including a component formed by using a metal film (including a layered film) for forming a source bus line and a source electrode.

A lower edge of the first electrode **21a** has a first protruding portion which protrudes downwards. An upper edge of the first electrode **21b** has a second protruding portion which protrudes upwards. A lower edge of the first protruding portion of the first electrode **21a** overlaps the CS bus line **15** or the storage capacitor counter electrode **18a(C).** An upper edge of the second protruding portion of the first electrode **21b** overlaps the CS bus line **15** or the storage capacitor counter electrode **18b (C) .** A contact hole **17a(C)** is formed in a region in which the first protruding portion of the first electrode **21a** overlaps the storage capacitor counter electrode **18a(C).** A contact hole **17a(C)** is formed in a region in which the first protruding portion of the first electrode **21a** overlaps the storage capacitor counter electrode **18a(C).** In the contact hole **17a(C),** the first electrode **21a** is connected to the storage capacitor electrode **16c(C).** A contact hole **17b(C)** is formed in a region in which the second protruding portion of the first electrode **21b** overlaps the storage capacitor counter electrode **18b(C).** In the contact hole **17b(C),** the first electrode **21b** is connected to the storage capacitor electrode **16c(C).**

As shown in FIG. **4(a)** and FIG. **4(b)****,** if the first protruding portion of the first electrode **21a** and the second protruding portion of the first electrode **21b** are arranged so as to engage with each other in the column direction, it is possible to decrease the area of the region light-blocked by the storage capacitor, as is seen from the comparison between FIG. **3** and FIG. **5****,** so that the effective aperture can be increased.

The storage capacitor counter electrode **18a(C)** overlaps an end portion of the slit **22a,** and end portions of the dielectric projections **44a2** and **44b2.** Accordingly, even if the alignment of liquid crystal molecules is disturbed in the end portions of these domain regulating structures, the light is blocked by the storage capacitor counter electrode **18a(C),** so that the display quality is not affected. In the LCD **100A** shown in FIG. **1****,** the dielectric projection **44a2** and the dielectric projection **44b2** are coupled. In the LCD **100C,** the dielectric projection **44a2** and the dielectric projection **44b2** are separated on the storage capacitor counter electrode **18a(C).** With such a configuration, when a liquid crystal material is injected, the liquid crystal material can flow and spread through the gap between the dielectric projection **44a2** and the dielectric projection **44b2,** so that it is possible to stably perform the injection of liquid crystal material. In addition, it is possible to attain an advantage that uniform application of alignment film can be easily performed. Herein, the dielectric projection **44a2** and the dielectric projection **44b2** are preferably arranged so that their edges respectively parallel to the row direction are mutually opposed. It is preferred that the gap between these edges is smaller than 8 µm. If the gap between the edges of the dielectric projection **44a2** and the dielectric projection **44b2** is equal to or more than 8 µm, the region in which the alignment of liquid crystal molecules is disturbed is undesirably increased.

The LCD **100C** has two first electrodes **21a** and **21b** similarly to the LCD **100B,** and also has four extended portions **21aE1(C), 21aE2(C), 21bE1(C),** and **21bE2(C)** in a pixel.

The extended portion **21aE1(C)** disposed on the left edge of the first electrode **21a** and the extended portion **21bE1(C)** disposed on the left edge of the first electrode **21b** are the same as the extended portions **21aE1(B)** and **21bE1(B)** in the LCD **100B,** respectively. The extended portion **21bE2(C)** disposed on the right edge of the first electrode **21b** is the same as the extended portion **21bE2(B)** in the LCD **100B.** Accordingly, as described by way of the LCD **100B,** the LCD **100C** can also suppress the degradation in display quality caused by the alignment disturbance of liquid crystal molecules in the vicinity of the edges of the first electrode without providing the above-mentioned auxiliary structure.

As for the extended portion **21aE2(C)** disposed on the right edge of the first electrode **21a,** the protruding amount in the row direction is smaller than that of the extended portion **21aE2(B)** of the LCD **100B.** This is because the edge is light-blocked by the storage capacitor counter electrode **18a(C),** as described above. The extended portion **21aE2(C)** can be omitted.

It is understood that all of the other extended portions may be omitted, and the electrode layer such as the storage capacitor counter electrode **18a(C)** may alternatively be used for light-blocking the region in which the alignment of liquid crystal molecules is disturbed. However, as described above by way of the LCD **100A** and the LCD **100B,** the configuration having the extended portions is advantageous from the aspect of effective aperture.

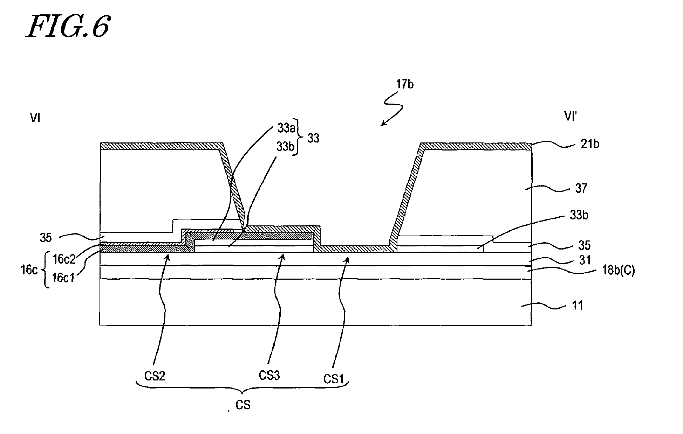

Next, with reference to FIG. **6****,** the sectional configuration of a portion in which the contact hole **17b** is formed. FIG. **6** is a sectional view taken along a line **VI-VI'** in FIG. **4(b)****.**

On a first substrate (e.g., a glass substrate) **11,** a storage capacitor counter electrode (a gate metal layer) **18b(C)** is formed. On the storage capacitor counter electrode **18b(C),** a gate insulating layer **31** is formed. On the gate insulating layer **31,** a semiconductor layer **33** is formed. The semiconductor layer **33** has a two-layer structure including an i layer **33b** and an n⁺ layer 33a. As shown in FIG. **4(a)****,** the two-dimensional shape of the semiconductor layer **33** when viewed from a direction perpendicular to the first substrate **11** is a U shape having a concave portion on the lower side. On the semiconductor layer **33,** storage capacitor electrode **16c** (a source-drain layer) is formed. The storage capacitor electrode **16c** is constituted by a Ti layer **16c1** and an Al layer **16c2.** As shown in FIG. **4(a)****,** the storage capacitor electrode **16c** also has a U shape having a concave portion on the lower side.

A passivation layer **35** and an interlayer insulating layer **37** are formed so as to cover the storage capacitor electrode **16c.** The contact hole **17b** is formed through the passivation layer **35** and the interlayer insulating layer **37.** On the interlayer insulating layer **37,** the first electrode **21b** is formed. The first electrode **21b** is connected to the storage capacitor electrode **16c** in the contact hole **17b.**

Storage capacitors **CS** are formed in a portion (referred to as **CS1**) in which the first electrode **21b** and the storage capacitor counter electrode **18b(C)** are mutually opposed with a gate insulating layer **31** interposed therebetween, and in a portion (referred to as **CS2**) in which the storage capacitor electrode **16c** and the storage capacitor counter electrode **18b(C)** are mutually opposed with the gate insulating layer **31** interposed therebetween. In addition, a portion (referred to as **CS3)** in which the semiconductor layer **33** is disposed as the lower layer of the storage capacitor electrode **16c** also contributes to the storage capacitor **CS.** In this portion **(CS3),** since the semiconductor layer **33** is disposed, the magnitude of the capacitance is varied depending on the potential relationship between the storage capacitor electrode **16c** and the storage capacitor counter electrode **18b(C).** In an Alternating-Current drive type liquid crystal display device, in the case where the same alternating-current signal as that of the common electrode is input into the storage capacitor counter electrode **18b(C),** in the case where a video signal having a polarity different from that of the storage capacitor counter electrode **18b(C)** is input into the source bus line, or in other cases, the magnitude of capacitance as the storage capacitor is different even if the areas of **CS2** and **CS3** are equal in plan.

The semiconductor layer **33** is used as an etching protecting film for the gate insulating layer **31** when the gate insulating layer **31,** the passivation layer **35,** and the interlayer insulating film **37** are patterned by using one and the same mask in a process of five masks (four masks) or any other processes.

As shown in FIG. **4(a)** and FIG. **4(b)****,** in the case where the contact holes **17a(C)** and **17b(C)** are provided respectively for the first electrode **21a** and the first electrode **21b,** the semiconductor layer **33** is also provided corresponding to the respective contact holes. In the contact hole **17b(C),** as described above, the semiconductor layer **33** and the storage capacitor electrode **16c(C)** have U shapes each having a concave portion on the lower side. On the other hand, in the contact hole **17a(C),** the semiconductor layer **33** and the storage capacitor electrode **16c(C)** have U shapes each having a concave portion on the upper side. As described above, when two concave portions (portions corresponding to the contact holes **17b(C)** and **17a(C)**) of the storage capacitor electrode **16c(C)** are made to be vertically symmetric, the positional shift in the vertical direction of the semiconductor layer **33** with respect to the storage capacitor electrode **16c(C)** can be mutually compensated (i.e., the area is kept unchanged). The positional shift in the horizontal direction is compensated in each of the contact holes **17a(C)** and **17b(C).** Accordingly, by adopting the configuration which is exemplarily described herein, it is difficult to vary the capacitance value of the storage capacitor **CS** for the positional shifts in four directions, i.e., up, down, right, and left. This effect can be similarly attained in the case where the concave portions of the semiconductor layer **33** and the storage capacitor electrode **16c(C)** are disposed in the horizontal direction.

The configuration exemplarily described herein can attain the effect of suppressing the capacitance variation for the positional shift in the vertical direction of the contact holes **17a(C)** and **17b(C).**

As shown in FIG. 6, the portion in which the storage capacitor CS is to be formed is determined depending on the position of the contact hole **17b.** The portion is a rectangular region in the concave portion of the U-shaped semiconductor layer **33** in FIG. **4(a)****.** For example, if the position of the U-shaped contact hole **17b** having the concave portion on the upper side is shifted largely downwards, the area of the rectangular portion in which the semiconductor layer **33** and the storage capacitor electrode **16c(C)** constitute the storage capacitor **CS** is decreased. On the other hand, in the contact hole **17a(C),** since the semiconductor layer **33** and the storage capacitor electrode **16c(C)** have the U shapes each having the concave portion on the lower side, even if the position of the contact hole **17a(C)** is shifted downwards, the area of the rectangular portion which forms the storage capacitor **CS** is not varied. Accordingly, if the concave portions of the two semiconductor layers **33** and the storage capacitor electrodes **16c(C)** corresponding to the contact holes **17a(C)** and **17b(C)** are made to be vertically symmetric (or horizontally symmetric), the effect of suppressing the capacitance variation for the positional shift in the up-down direction (the left-right direction) of the contact holes **17a(C)** and **17b(C).**

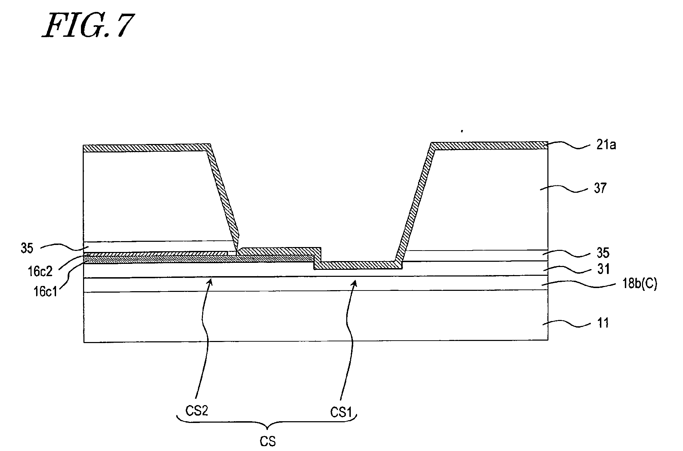

The above-described effects can be attained for the configuration without including the semiconductor layer **33,** as shown in FIG. **7****,** as the structure of the portion in which the contact hole is formed. FIG. **7** is a sectional view corresponding to the line **VI-VI'** in FIG. **4(b)****.**

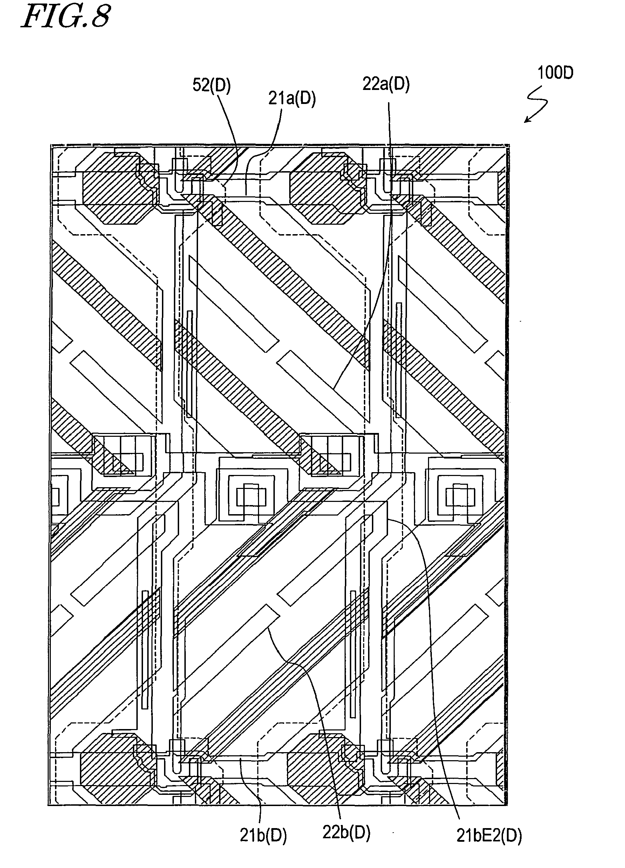

Next, with reference to FIG. **8****,** the configuration of an LCD **100D** in one embodiment of the first and the second inventions will be described. FIG. **8** is a plan view showing the configuration of the LCD **100D.**

The LCD **100D** is different from the LCD **100C** shown in FIG. **4(a)** and FIG. **4(b)** in that the LCD **100D** does not include extended portions on the left edges of the first electrodes **21a** and **21b (21aE1(C)** and **21bE1 (C)** in the LCD **100C).** An extended portion 21bE2(D) on the right edge of the first electrode **21b** is the same as the extended portion **21bE2(C)** of the LCD **100C.**

Since the LCD **100D** does not include extended portions on the left edges of the first electrodes **21a** and **21b,** the region in which the alignment of liquid crystal molecules is disturbed is formed in the corresponding portion on the left edges of the first electrodes **21a** and **21b.** In order to prevent the disturbance from affecting the display, a black matrix **52(D)** is extendedly provided to the inner side of a pixel than the black matrix **52** of the LCD **100C** (see FIG. **4**).

The LCD 100D is different from the LCD **100C** in that the slits **22a(D)** and **22b(D)** are configured as two slits arranged in a line along a predetermined direction. If the slits are configured as a plurality of slits arranged in a line such as the slits **22a(D)** and **22b(D),** (in other words, if a portion in which a conductive layer exists between slits is provided), it is possible to attain the effect of stabilizing the alignment of liquid crystal molecules in the slits. The slits form an oblique electric field along the edge, but the alignment regulating property does not affect the liquid crystal molecules positioned immediately above the slit, or the alignment regulating property is weak. For example, if the slit is long, the alignment of liquid crystal molecules positioned immediately above the slit is unstable, so that there sometimes arises a problem such as that the response speed is slow. Accordingly, by separating the slit, i.e., by arranging a plurality of slits in a line, the alignment of liquid crystal molecules can be stabilized (see FIG. **9**). It is preferred that the gap between the slit and the slit arranged in a line is smaller than 8 µm. When the gap is 8 µm or more, the influence of the alignment of liquid crystal molecules in the portion in which the conductive layer constituting the gap between the slits on the display is excessively increased, so that the display luminance may be lowered.

As shown in the LCD **100D,** as for the slits, it is preferred that two or more portions in which the conductive layer exists are provided on the line along the slits arranged in one line. The purpose is to reduce the risk of breaking the first electrode **21a** or **21b** in the portion in which the slits are formed. For example, as in the LCD **100A** shown in FIG. **1**, if one slit (a strip-like slit) **22** continued to the edge of the first electrode **21a** is formed, the conductive layer exists only one portion on the line along the slit **22a.** Accordingly, if disconnection occurs in this portion, about half of the first electrode **21a** does not function as an electrode.

FIG. **9** shows the result of transmittance distribution obtained by simulation in the condition where a white display voltage is applied across the liquid crystal layer of the pixel in the LCD **100D.**

As is seen from the comparison between FIG. **9** and FIG. **5****,** in the upper left portion of a pixel, the area light-blocked by the black matrix **52(D)** is larger than that of the LCD **100C.** In addition, in the lower left corner portion of the pixel, the area of a black region is increased by the area corresponding to the extended portion **21bE1(C)** which is not provided. In FIG. **9****,** in a portion corresponding to the slits **22a(D)** and **22b(D),** a cross-like black pattern is formed. This is caused as the result of stabilizing the alignment of liquid crystal molecules in the gap between two slits arranged in a line.

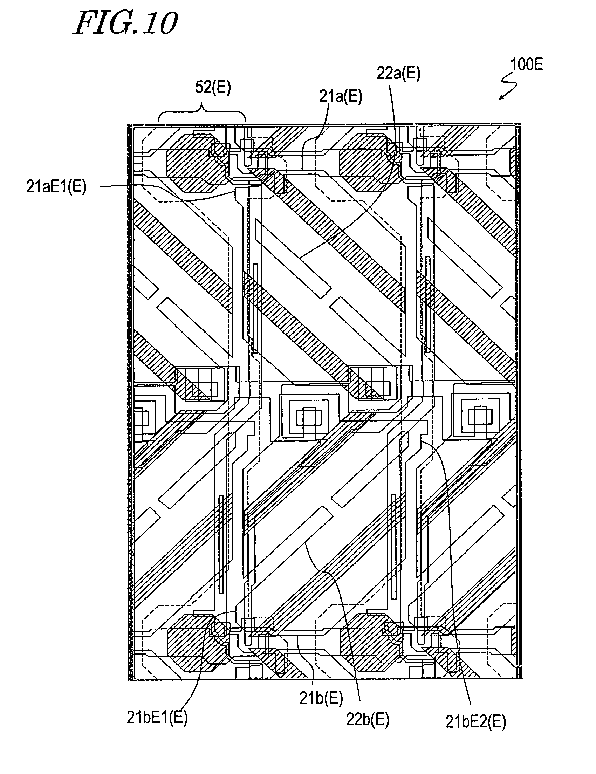

Next, with reference to FIG. **10****,** the configuration of an LCD **100E** in one embodiment of the first and second inventions will be described. FIG. **10** is a plan view showing the configuration of the LCD **100E.**

The LCD **100E** is different from the LCD **100D** in that the LCD **100E** includes extended portions **21aE1(E)** and **21bE1(E)** on the left edges of the first electrodes **21a(E)** and **21b(E).** The shapes of the extended portions **21aE1(E)** and **21bE1(E)** are different from those of the extended portions **21aE1(C)** and **21bE1(C)** in the LCD **100C.** These are only the variations of shapes of the extended portions. A black matrix **52(E)** included in the LCD **100E** has the same pattern as that of the black matrix **52** in the LCD **100C.** As for the black matrix **52(E),** the aperture in the upper left corner portion of a pixel is larger than that of the black matrix **52(D)** in the LCD **100D.** In addition, the shape of the extended portion **21bE2(E)** of the first electrode **21b(E)** is slightly different from the extended portion **21bE2(D)** in the LCD **100D,** but they hardly affect the alignment of liquid crystal molecules.

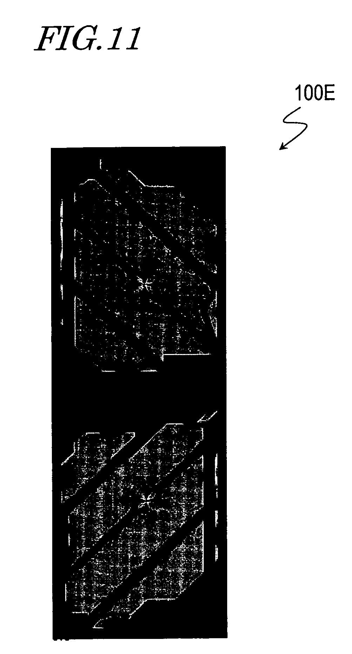

FIG. **11** shows the result of transmittance distribution obtained by simulation in a condition where a white display voltage is applied across the liquid crystal layer of a pixel of the LCD **100E.**

As is seen from the comparison between FIG. **11** and FIG. **9****,** in the upper left corner portion in a pixel, the area light-blocked by a black matrix **52(E)** is smaller than that in the LCD **100D.** In the lower left corner portion of the pixel, the area of the black region is reduced by the area corresponding to the extended portion **21bE1(E).**

Next, with reference to **(a)** to **(d)** of FIG. **12****,** as for the LCD **100E** and the LCD **100C,** the configuration of the middle portion in the column direction of the right edge of the pixel will be described. FIG. **12(a)** shows the result of transmittance distribution obtained by simulation in the condition where a white display voltage is applied across the liquid crystal layer of the LCD **100E** (the upper half of a pixel). FIG. **12(b)** is a plan view of a lower right portion of the first electrode **21a(E)** of the LCD **100E.** FIG. **12(c)** shows the result of transmittance distribution obtained by simulation in the condition where a white display voltage is applied across the liquid crystal layer of the LCD **100C** (the lower right portion of the upper half of a pixel). FIG. **12(d)** is a plan view of the lower right portion of the first electrode **21a(C)** of the LCD **100C.**

The LCD **100E** does not have an extended portion on the right side of the first electrode **21a(E)** as shown in FIG. **12(b)****.** On the other hand, the LCD **100C** has the extended portion **21aE2(C)** on the right side of the first electrode **21a(C)** as shown in FIG. **12(d)****.**

As is seen from the comparison between FIG. **12(a)** and FIG. **12(c)****,** the black region is slightly reduced in the LCD **100C.** As described above, by the provision of the extended portion **21aE2(C),** it is possible to suppress the degradation in display quality caused by the disturbance in alignment of liquid crystal molecules in the vicinity of the edge of the first electrode without providing the above-mentioned auxiliary structure.

Each of the liquid crystal display devices **100A** to **100E** described above exemplarily includes two first electrodes **21a** and **21b** in a pixel, but the configuration is not limited to this. Alternatively, the number of first electrodes formed in one pixel may be three or more, or may be one. In the case where a plurality of first electrodes are provided in one pixel, a multi-pixel structure may be adopted. As the multi-pixel structure, for example, the configuration disclosed in Patent Document 3 can be adopted.

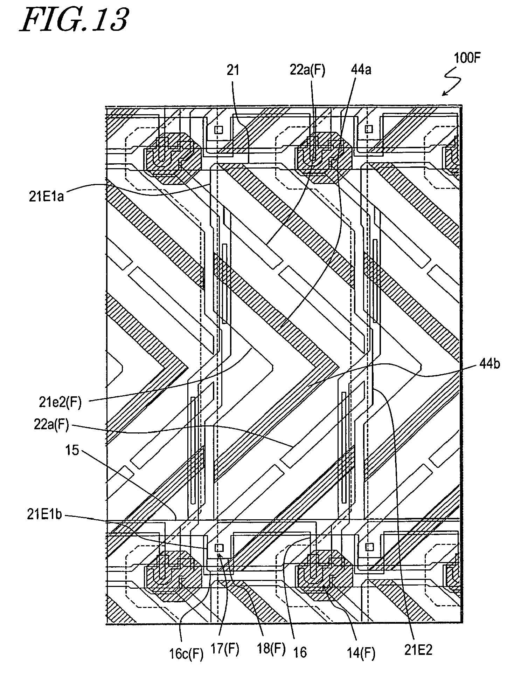

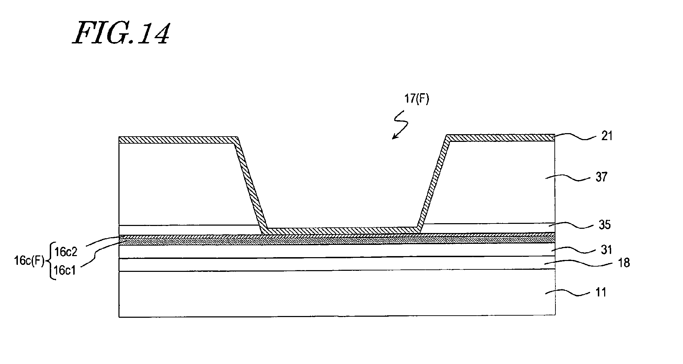

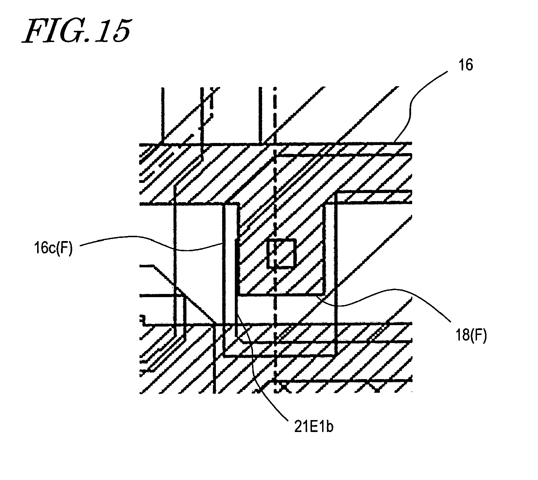

Next, with reference to FIG. **13** to FIG. **15****,** the configuration of an LCD 100F in one embodiment of the first and second inventions will be described. FIG. **13** is a plan view showing the configuration of the LCD **100F.** FIG. **14** is a view showing a sectional configuration of a portion in which a contact hole **17(F)** is formed. FIG. **15** is a view showing a planar structure of the portion in which the contact hole **17(F)** is formed.

As shown in FIG. 13, the LCD **100F** includes one first electrode **21** (a pixel electrode) in one pixel. The first electrode **21** has a slit **22a(F)** extending in the first and second directions. The arrangement of the domain regulating structure in one pixel is the same as in the liquid crystal display devices in the above-described embodiments.

The first electrode **21** has extended portions **21E1a** and **21E1b** on the left edge, and has an extended portion **21E2** on the right edge. The extended portions **21E1a** and **21E1b** are formed in corner portions of the pixel, and the extended portion **21E2** is formed in the vicinity of the middle of the pixel in the column direction.

The left edge of the first electrode **21** has a notch portion **21e2(F)** in a portion opposed to an extended portion **21E2** formed on the right edge of a first electrode **21** included in a pixel which is adjacent to the corresponding pixel on the left side. An end portion of the extended portion **21E2** of the first electrode **21** included in the pixel adjacent on the left side is positioned in the notch portion **21e2(F).** By the provision of the notch portion **21e2(F),** the amount of protrusion of the extended portion can be increased.

The notch portion **21e2(F)** is a notch portion of isosceles triangle having a line parallel to the row direction at the center of the pixel in the column direction as an axis of symmetry. The notch portion **21e2(F)** has an edge parallel to the first direction and an edge parallel to the second direction. The edge parallel to the first direction and the edge parallel to the second direction act so as to stably form liquid crystal domains between the respective edges and adjacent dielectric projections **44a** and **44b.**

FIG. **14** shows the sectional structure of the portion in which the contact hole **17(F)** is formed in the LCD **100F.** On a first substrate **11,** a storage capacitor counter electrode (a gate metal layer) **18** is formed. On the storage capacitor counter electrode **18,** a gate insulating layer **31** and a storage capacitor electrode (a source metal layer) **16c(F)** are formed. The contact hole **17(F)** is formed through a passivation layer **35** and an interlayer insulating layer **37** formed so as to cover the gate insulating layer **31** and the storage capacitor electrode **16c(F).** On the interlayer insulating layer **37,** the first electrode **21** is formed, for example, by a transparent conductive layer of ITO, IZO, or the like. The first electrode **21** is connected to the storage capacitor electrode **16c(F)** in the contact hole **17(F).**

FIG. **15** shows the planar structure of the portion in which the contact hole **17(F)** is formed in the LCD **100F.** As shown in FIG. **15****,** the edge of the extended portion **21E1b** of the first electrode **21** is light-blocked by the storage capacitor electrode (the source metal layer) **16c(F).** In the liquid crystal display devices in the above-described embodiments, the light is blocked by using the storage capacitor counter electrodes (gate metal layers) **18a** and **18b.** However, as exemplarily described herein, the light may be blocked by the storage capacitor electrode (the source metal layer) **16c(F).**

The configuration of the first invention in which the extended portions are provided and the configuration of the second invention utilizing an electrode layer (e.g. a gate metal layer or a source metal layer) are not limited to the above-described embodiments, but the respective configurations may be adopted independently, or may be variously used in combination.

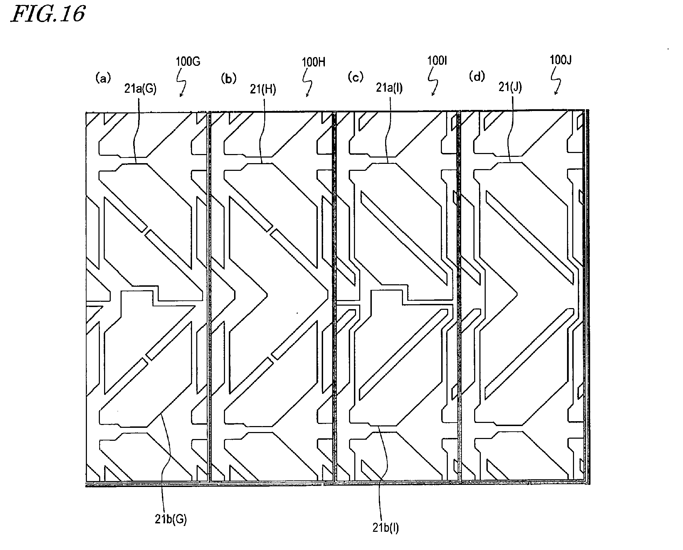

For example, the first electrodes having patterns in LCDs **100G, 100H, 100I,** and **100J** shown in **(a)** to **(d)** of FIG. **16** may be exemplarily represented.

The LCD **100G** is a modified embodiment of the LCD **100C** and the LCD **100D,** and includes the first electrodes **21a(G)** and **21b(G)** having the pattern shown in FIG. **16(a)****.** Since the conductive layer exists only in one location on a line along the slit, it is preferred that the pattern of slit may be modified as the slit **22a(D)** in the LCD **100D** in view of the production yield.

A first electrode **21(H)** included in the LCD **100H** has a pattern in which the first electrodes **21a(G)** and **21b(G)** of the LCD **100G** are integrated.

The LCD **100I** is a modified embodiment of the LCD **100C** and the LCD **100D,** and includes first electrodes **21a(I)** and **21b(I)** of the pattern shown in FIG. **16(c)****.** The LCD **100I** is more preferable than the LCD **100G** in the point that the conductive layer exist in two locations on the line along the slit.

A first electrode **21(J)** included in the LCD **100J** has a pattern in which the first electrodes **21a(I)** and **21b(I)** of the LCD **100I** are integrated.

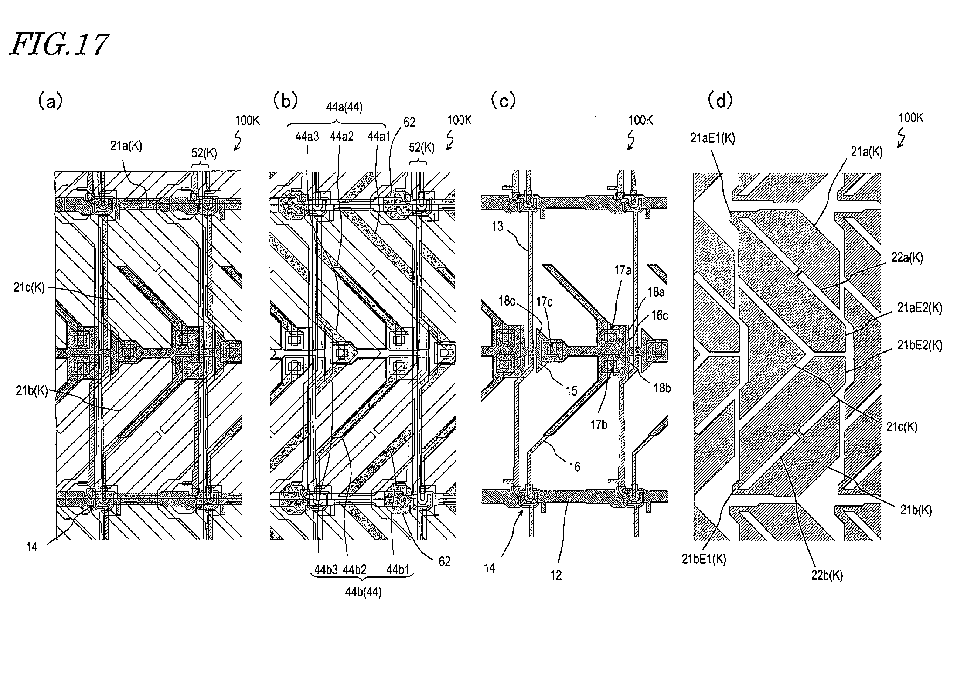

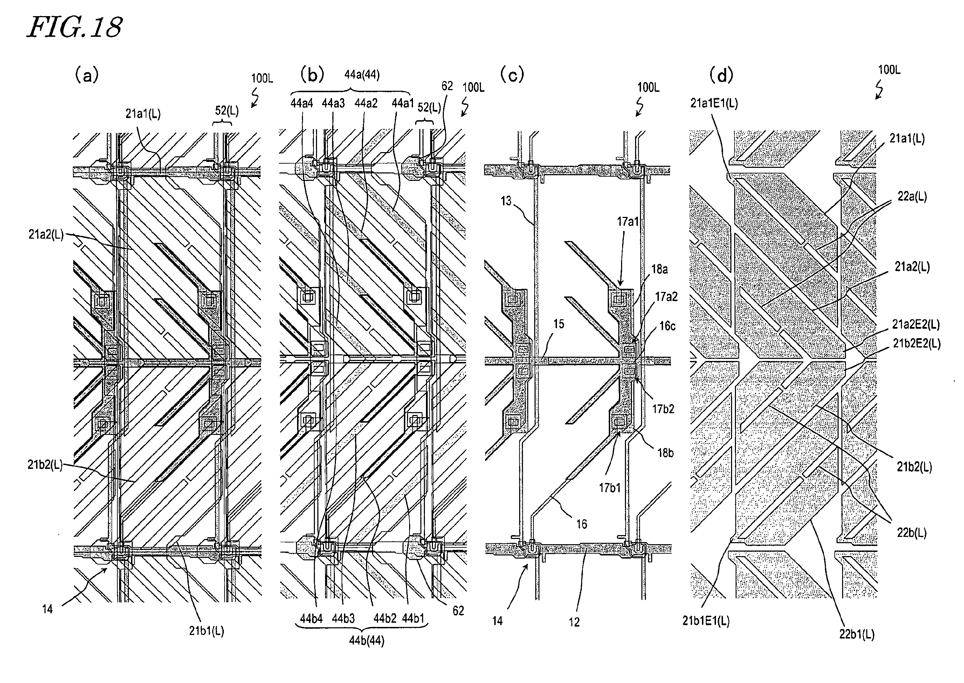

Next, with reference to FIG. **17** and FIG. **18****,** an example of liquid crystal display device in which the number of first electrodes formed in one pixel is three or more will be described. Both of the liquid crystal display device **100K** shown in FIG. **17** and the liquid crystal display device **100L** shown in FIG. **18** are the embodiments of the first invention and also the embodiments of the second invention.

The liquid crystal display device **100K** shown in **(a)** to **(d)** of FIG. **17** includes three first electrodes **21a(K), 21b(K),** and 21c (K) in one pixel. FIG. **17(a)** and FIG. **17(b)** are plan views of a TFT substrate (a first substrate) and a CF substrate (a second substrate). FIG. **17(a)** is a view in which a gate metal layer and a source metal layer of the first substrate are depicted by hatching. FIG. **17(b)** is a view in which a dielectric projection and a columnar spacer of the second substrate are depicted by hatching. FIG. **17(c)** and FIG. **17(d)** are plan views of the TFT substrate (the first substrate). FIG. **17(c)** is a view showing the gate metal layer and the source metal layer of the TFT substrate. FIG. **17(d)** is a view showing first electrodes of the TFT substrate.

The three first electrodes **21a(K), 21b(K),** and **21c(K)** provided in each pixel of the LCD **100K** are connected to a source bus line **13** via a single TFT **14.** The ON/OFF control of the TFT **14** is performed in accordance with a gate signal supplied from a gate bus line **12** to a gate. The first electrodes **21a(K), 21b(K),** and **21c(K)** are connected to a drain of the TFT **14** and a storage capacitor electrode **16c** as an extended portion of a drain lead-out wiring 16 in contact holes **17a, 17b,** and **17c,** respectively. When the TFT **14** is turned into the ON state, a source signal voltage supplied from the source bus line **13** is supplied to the first electrodes **21a(K), 21b(K),** and **21c(K).** The pixel structure of the LCD **100K** is not a multi-pixel structure.

The first electrodes **21a(K)** and the first electrode **21b(K)** are, similarly to the first electrodes **21a** and **21b** in the liquid crystal display device **100B** shown in FIG. **2****,** located in upper and lower positions along the column direction of pixels, and between the first electrode **21a(K)** and the first electrode **21b(K),** a CS bus line (a storage capacitor wiring) **15** is provided. A lower edge of the first electrode **21a(K)** and an upper edge of the first electrode **21b(k)** (both edges are parallel to the row direction) are located so as to overlap the CS bus line **15.** In other words, the gap between the first electrode **21a(K)** and the first electrode **21b(K)** is located on the CS bus line **15.** If such a configuration is adopted, the region in which the alignment of liquid crystal molecules is disturbed is light-blocked by the CS bus line **15,** so as to improve the display quality. It is understood that the gap between the first electrode **21a(K)** and the first electrode **21b(K)** may not be located on the CS bus line **15.** If such a configuration is adopted, the transmittance can be increased.

The first electrode **21a(K)** has a slit (a first linear component) **22a(K)** extending in the first direction when viewed from a direction perpendicular to the first substrate, and has a pair of edges parallel to the first electrode. The first electrode **21b(K)** has a slit (a second linear component) **22b(K)** extending in a second direction which is different from the first direction by about 90 degrees, and a pair of edges parallel to the second direction. The azimuth angle of the first direction is 135° (or 315°), and the azimuth angle of the second direction is 225° (or 45°).

The liquid crystal display device **100K** further includes the first electrode **21c(K).** The first electrode **21c(K)** has an edge parallel to the first direction and an edge parallel to the second direction. The edge parallel to the first direction of the first electrode **21c(K)** is disposed so as to have a predetermined gap with respect to one of the pair of edges parallel to the first direction of the first electrode **21a(K).** Similarly, the edge parallel to the second direction of the first electrode **21c(K)** is disposed so as to have a predetermined gap with respect to one of the pair of edges parallel to the second direction of the first electrode **21b(K).** These gaps function as the first domain regulating structure, respectively, similarly to the slits **22a(K)** and **22b(K).** The notch portion including the other one of the pair of edges parallel to the first direction of the first electrode **21a(K)** (a portion without the conductive layer) and the notch portion including the other one of the pair of edges parallel to the second direction of the second electrode **21b(K)** function as the first domain regulating structure, respectively, similarly to the gap between the first electrodes **21a(K)** and **21c(K)** and the gap between the first electrodes **21b(K)** and **21c(K).** Specifically, the first domain regulating structure included in the pixel of the liquid crystal display device **100K** has three first linear components parallel to the first direction on the upper side than the CS bus line **15,** and three second linear components parallel to the second direction on the lower side than the CS bus line **15.**

As shown in FIG. **17(b)****,** the liquid crystal display device **100K** includes a dielectric projection **44** as the second domain regulating structure on the side of the liquid crystal layer of the second electrode. In FIG. **17(b)****,** the dielectric projection **44** and the columnar spacer **62** are depicted by hatching.

The dielectric projection **44** has three third linear components **44a1, 44a2,** and **44a3 (44a)** extending in the first direction, and three fourth linear components **44b1, 44b2,** and **44b3 (44b)** extending in the second direction. When viewed from the direction perpendicular to the first substrate, the three third linear components and the three first linear components are alternately arranged, and the three fourth linear components and the three second linear components are alternately arranged. By the first domain regulating structure and the second domain regulating structure with such an arrangement, four kinds of domains in which the tilt directions of the liquid crystal molecules are mutually different by about 90° are formed.

A storage capacitor counter electrode **18a** extendedly disposed on the upper side of the column direction from the CS bus line **15** has a portion which is extended so as to overlap the dielectric projection **44a2.** A storage capacitor counter electrode **18b** extendedly disposed on the lower side of the column direction from the CS bus line **15** has a portion which is extended so as to overlap the dielectric projection **44b2.** Since the above-mentioned electrodes constituting the storage capacitors do not transmit light, if the electrodes are disposed in a pixel, the effective aperture (the ratio of area through which the light actually utilized for the display transmits to the area of display region) is reduced. In addition, in the portion in which the dielectric projection **44** is formed, the transmittance of light is reduced. By superposing them, the loss in transmitting area of a pixel can be suppressed. It should be noted that the area of electrode constituting the storage capacitor is appropriately set in accordance with the capacitive value which is electrically designed.

The storage capacitor counter electrodes **18a, 18b,** and **18c** as the extended portions of the CS bus line **15** constitute storage capacitors **(CS)** together with the storage capacitor electrode **16c** opposed via an insulating layer. Contact holes **17a, 17b,** and 17c are formed above the storage capacitors. The contact holes **17a, 17b,** and **17c** have the same structure as that of the contact holes **17a(C)** or **17b(C)** which are described above with reference to FIG. **4** and FIG. **6****.**

In the liquid crystal display device **100K,** similarly to the above-mentioned liquid crystal display device **100C,** the storage capacitor counter electrodes **18a** and **18b** are disposed so as to hide the annular dark lines appearing in the vicinity of the right edges of the first electrodes **21a** and **21b** in the liquid crystal display device 100B (see FIG. 3). Herein an example in which the storage capacitor counter electrodes **18a** and **18b** are used as the light blocking layer is described. Alternatively, the storage capacitor electrode **16c** may be used as the light blocking layer, or any other electrode layer may be used.

In the LCD **100K,** the storage capacitor counter electrode **18a** is formed so as to overlap the lower right corner portion (the extended portion **21aE2(K)**) of the first electrode **21a** including the edge parallel to the row direction and the edge parallel to the column direction. In addition, the storage capacitor counter electrode **18b** is formed so as to overlap the upper right corner portion (the extended portion **21bE2(K)**) of the first electrode **21b** including the edge parallel to the row direction and the edge parallel to the column direction. Specifically, each of the storage capacitor counter electrodes **18a** and **18b** overlaps at least part of the edge parallel to the row direction and at least part of the edge parallel to the column direction of the corresponding corner portion. Accordingly, in the LCD **100K,** the annular dark lines shown in FIG. **3** are hidden by the storage capacitor counter electrodes **18a** and **18b.**

In addition, the storage capacitor counter electrode **18a** overlaps the end portion of the dielectric projection **44a2,** and the storage capacitor counter electrode **18b** overlaps the end portion of the dielectric projection **44b2.** Therefore, even if the alignment of liquid crystal molecules is disturbed in the end portion of these domain regulating structures, the light is blocked by the storage capacitor counter electrodes **18a** and **18b,** so that the display quality is not affected. The end portions of the other domain regulating structures (the slits **22a(K)** and 22b(K), and the dielectric projections **44a1, 44a3, 44b1,** and 44b3) are light-blocked by the black matrix **52(K),** the CS bus line 15, or the like.

In addition, as for the LCD **100K,** similarly to the LCD 100B and the LCD 100C, the first electrodes **21a** and **21b** have four extended portions **21aE1(K), 21aE2(K), 21bE1(K),** and **21bE2(K).**

The extended portion **21aE1(K)** protruding in the row direction (the left side in FIG. **17**) is formed in a portion sandwiched between a first portion in which the left edge of the first electrode **21a** intersects with the extended line of the slit **22a(K)** and a second portion in which the left edge of the first electrode **21a(K)** intersects with the dielectric projection **44a2.**

The extended portion **21aE2(K)** protruding in the row direction (the right side in FIG. **17**) is formed in a portion sandwiched between a first portion in which the right edge of the first electrode **21a(K)** intersects with the slit **22a(K)** and a second portion in which the lower edge of the first electrode **21a(K)** intersect with the extended line of the dielectric projection **44a2.**

Similarly, the first electrode **21b(K)** has the extended portion **21bE1(K)** protruding in the row direction (the left side in FIG. **17**) in a portion sandwiched between a first portion in which the left edge of the first electrode **21b(K)** intersects with the extended line of the slit **22b(K)** and a second portion in which the left edge of the first electrode **21b(K)** intersects with the dielectric projection **44b2.** In addition, the first electrode **21b(K)** has the extended portion **21bE2(K)** protruding in the row direction (the right side in FIG. **17**) in a portion sandwiched between a first portion in which the right edge of the first electrode **21b(K)** intersects with the slit **22b(K)** and a second portion in which the upper edge of the first electrode **21b(K)** intersects with the dielectric projection 44b2.

The extended portion **21aE1(K)** has an edge parallel to the direction in which the slit **22a(K)** having the extended line intersecting with the edge of the first portion extends (the first direction). The extended portion **21aE1(K)** also has an edge parallel to the column direction. Similarly, the extended portion **21bE1(K)** has an edge parallel to a direction in which the slit **22b(K)** having the extended line intersecting with the edge of the first portion extends (the second direction). The extended portion **21bE1(K)** also has an edge parallel to the column direction.

In addition, the extended portion **21aE2(K)** has an edge parallel to a direction in which the slit **22a(K)** intersecting with the edge of the first portion extends (the first direction). The edge and the edge of the slit **22a(K)** are continuous. The extended portion **21aE2(K)** also has an edge parallel to the row direction. Similarly, the extended portion **21bE2(K)** has an edge parallel to a direction in which the slit **22b(K)** intersecting with the edge of the first portion extends (the second direction). The edge and the edge of the slit **22b(K)** are continuous. The extended portion **21bE2(K)** also has an edge parallel to the row direction.

The ends of these extended portions **21aE1(K), 21aE2(K), 21bE1(K),** and **21bE2(K)** in the row direction are arranged so as to overlap the black matrix **52(K),** when viewed from the direction perpendicular to the first substrate. Accordingly, if the alignment of liquid crystal molecules is disturbed in the end portions of the extended portions **21aE1(K), 21aE2(K), 21bE1(K),** and **21bE2(K)** in the row direction, the portions are light-blocked by the black matrix **52,** so that the display is not adversely affected. Therefore, as described with reference to the LCD **100B** and the LCD **100C,** it is possible to suppress the degradation in display quality caused by the disturbance in alignment of liquid crystal molecules in the vicinity of the edge of the first electrode without providing the above-mentioned auxiliary structure in the LCD **100K.**

As described above, it is understood that all of the extended portions may be omitted, and the region in which the alignment of liquid crystal molecules is disturbed is light-blocked by using the electrode layer such as the storage capacitor counter electrode **18a(C).** However, as described above, the provision of the extended portions can increase the effective aperture.

Next, with reference to **(a)** to **(d)** of FIG. **18****,** the configuration of a liquid crystal display device **100L** will be described. The liquid crystal display device **100L** includes four first electrodes **21a1(L), 21a2(L), 21b1(L),** and **21b2(L)** in one pixel. In FIG. **18, (a)** and **(b)** are plan views of a TFT substrate (a first substrate) and a CF substrate (a second substrate). FIG. **18(a)** is a view in which a gate metal layer and a source metal layer of the first substrate are depicted by hatching. FIG. **18(b)** is a view in which a dielectric projection and a columnar spacer of the second substrate are depicted by hatching. In FIG. **18, (c)** and **(d)** are plan views of the TFT substrate (the first substrate). FIG. **18(c)** is a view showing a gate metal layer and a source metal layer of the TFT substrate. FIG. **18(d)** is a view showing the first electrodes of the TFT substrate.

The four first electrodes **21a1(L), 21a2(L)**, **21b1(L),** and 21b2(L) provided in each pixel of the LCD **100L** are connected to a source bus line **13** via a single TFT **14.** The ON/OFF control of the TFT **14** is performed by a gate signal supplied from the gate bus line **12** to the gate. The first electrodes **21a1(L), 21a2(L), 21b1(L),** and **21b2(L)** are connected to a drain of the TFT **14** and the storage counter electrode **16c** as the extended portion of the drain lead-out wiring **16** in contact holes **17a1, 17a2, 17b1,** and **17b2,** respectively. When the TFT **14** is turned into the ON state, a source voltage supplied from the source bus line 13 is supplied to the first electrodes **21a1(L), 21a2(L), 21b1(L),** and **21b2(L).** The pixel structure of the LCD **100L** is not a multi-pixel structure.

The first electrode **21a2(L)** and the first electrode **21b2(L)** are arranged in upper and lower positions along the column direction of pixels, similarly to the first electrodes **21a** and **21b** in the liquid crystal display device **100B** shown in FIG. **2****,** and a CS bus line (a storage capacitor wiring) **15** is disposed between the first electrode **21a2(L)** and the first electrode **21b2(L).** A lower edge of the first electrode **21a2(L)** and an upper edge of the first electrode **21b2(L)** (both are parallel to the row direction) are arranged so as to overlap the CS bus line **15.** Specifically, the gap between the first electrode **21a2(L)** and the first electrode **21b2(L)** is positioned on the CS bus line **15.** When such a configuration is adopted, the region in which the alignment of liquid crystal molecules is disturbed is light-blocked by the CS bus line **15,** so as to improve the display quality. Alternatively, the gap between the first electrode **21a2(L)** and the first electrode **21b2(L)** may not be disposed on the CS bus line **15.** By adopting such a configuration, it is possible to improve the transmittance.

Each of the first electrodes **21a1(L)** and **21a2(L)** has a slit (a first linear component) **22a(L)** extending in the first direction when viewed from the direction perpendicular to the first substrate, and a pair of edges parallel to the first direction. Each of the first electrodes **21b1(L)** and **21b2(L)** has a slit (a second linear component) **22b(L)** extending in the second direction different from the first direction by about 90°, and a pair of edges parallel to the second direction. The azimuth angle of the first direction is 135° (or 315°), and the azimuth angle of the second direction is 225° (or 45°).

One of the pair of edges parallel to the first direction of the first electrode **21a1(L)** is disposed so as to have a predetermined gap with one of the pair of edges parallel to the first direction of the first electrode **21a2(L).** Similarly, one of the pair of edges parallel to the second direction of the first electrode **21b1(L)** is disposed so as to have a predetermined gap with one of the pair of edges parallel to the second direction of the first electrode **21b2(L).** These gaps function as the first domain regulating structure, similarly to the slits **22a(L)** and **22b(L).** A notch portion (a portion without a conductive layer) including the other one of the pair of edges parallel to the first direction of the first electrode **21a1(L),** a notch portion including the other one of the pair of edges parallel to the first direction of the first electrode **21a2(L),** a notch portion including the other one of the pair of edges parallel to the second direction of the first electrode **21b1(L),** and a notch portion including the other one of the pair of edges parallel to the second direction of the first electrode **21b2(L)** function as the first domain regulating structure, respectively, similarly to the gap between the first electrodes **21a1(L)** and **21a2(L)** and the gap between the first electrodes **21b1(L)** and **21b2(L).** In other words, the first domain regulating structure included in the pixel of the liquid crystal display device **100L** has five first linear components parallel to the first direction on the upper side than the CS bus line **15,** and has five second linear components parallel to the second direction on the lower side than the CS bus line **15.**

The liquid crystal display device **100L** has a dielectric projection **44** as the second domain regulating structure on the side of the liquid crystal layer of a second electrode, as shown in FIG. **18(b)****.** In FIG. **18(b)****,** the dielectric projection **44** and the columnar spacer **62** are depicted by hatching.

The dielectric projection **44** has four three linear components **44a1, 44a2, 44a3,** and **44a4(44a)** extending in the first direction, and four fourth linear components **44b1,** 44b2, **44b3,** and 44b4(44b) extending in the second direction. When viewed from the direction perpendicular to the first substrate, the four three linear components and the five first linear components are alternately arranged, and the four fourth linear components and the five second linear components are alternately arranged. By means of the first domain regulating structure and the second domain regulating structure with such arrangements, four kinds of domains in which liquid crystal molecules are tilted in directions mutually different by about 90°.

The storage capacitor counter electrode **18a** extendedly disposed on the upper side of the column direction from the CS bus line **15** has a portion extendedly formed so as to overlap the dielectric projection **44a2** and a portion extendedly formed so as to overlap the dielectric projection **44a3.** The storage capacitor counter electrode **18b** extendedly disposed on the lower side of the column direction from the CS bus line **15** has a portion extendedly formed so as to overlap the dielectric projection **44b2** and a portion extendedly formed so as to overlap the dielectric projection 44b3.

The storage capacitor counter electrodes **18a** and **18b** which are the extended portions of the CS bus line **15** constitute a storage capacitor **(CS)** together with the storage capacitor electrode **16c** which is opposed via the insulating layer. Contact holes **17a1, 17a2, 17b1,** and **17b2** are formed on the storage capacitor. The contact holes **17a1, 17a2, 17b1,** and **17b2** have the same structure as that of the contact holes **17a(C)** or **17b(C)** described above with reference to FIG. **4** and FIG. **6****.**

In the liquid crystal display device **100L,** similarly to the above-described liquid crystal display device **100K,** the storage capacitor counter electrodes **18a** and **18b** are disposed so as to hide the annular dark lines (see FIG. 3) appearing in the vicinity of the right edge of the first electrode in the liquid crystal display device **100B.** Herein, the storage capacitor counter electrodes **18a** and **18b** are exemplarily used as the light blocking layer. Alternatively, the storage capacitor electrode **16c** may be used as the light blocking layer, or any other electrode layer may be used.

In the LCD **100L,** the storage capacitor counter electrode **18a** is formed so as to overlap the lower right corner portion (the extended portion **21a2E2(L))** of the first electrode **21a** including the edge parallel to the row direction and the edge parallel to the column direction. The storage capacitor counter electrode **18b** is formed so as to overlap the upper right corner portion (the extended portion **21b2E2(L))** of the first electrode **21b(L)** including the edge parallel to the row direction and the edge parallel to the column direction. In other words, each of the storage capacitor counter electrodes **18a** and **18b** overlaps at least part of the edge parallel to the row direction and at least part of the edge parallel to the column direction of the corresponding corner portion. Accordingly, in the LCD **100L,** the annular dark lines shown in FIG. **3** are hidden by the storage capacitor counter electrodes **18a** and **18b.**

The storage capacitor counter electrode **18a** overlaps end portions of the dielectric projections **44a2** and **44a3,** and the storage capacitor counter electrode **18b** overlaps end portions of the dielectric projections **44b2** and **44b3.** Accordingly, even if the alignment of liquid crystal molecules is disturbed in the end portions of these domain regulating structures, the light is blocked by the storage capacitor counter electrodes **18a** and **18b,** so as not to affect the display quality. It is noted that the end portion of the other domain regulating structure (the slits **22a(L)** and **22b(L)** and the dielectric projections **44a1, 44a4, 44b1,** and **44b4**) are light-blocked by the black matrix **52(L)** or the CS bus line **15.**

In addition, in the LCD **100L,** similarly to the LCD **100K,** the first electrodes **21a1(L), 21a2(L), 21b1(L),** and **21b2(L)** have four extended portions **21a1E1(L), 21a2E2(L), 21b1E1(L),** and **21b2E2(L).**

The extended portion **21a1E1(L)** protruding in the row direction (the left side in FIG. **18****)** is formed in a portion sandwiched between a first portion in which the left edge of the first electrode **21a1(L)** intersects with the extended line of the slit **22a(L)** and a second portion in which the left edge of the first electrode **21a** intersects with the dielectric projection **44a2.**

The extended portion **21a2E2(L)** protruding in the row direction (the right side in FIG. **18****)** is formed in a portion sandwiched between a first portion in which the right edge of the first electrode **21a2(L)** intersects with the slit **22a(L)** and a second portion in which the lower edge of the first electrode **21a2(L)** intersects with the dielectric projection **44a3.**

Similarly, the first electrode **21b1(L)** has the extended portion **21b1E1(L)** protruding in the row direction (the left side in FIG. **18****)** in a portion sandwiched between a first portion in which the left edge of the first electrode **21b1(L)** intersects with the extended line of the slit **22b(L)** and a second portion in which the left edge of the first electrode **21b1(L)** intersects with the dielectric projection **44b2.** Also, the first electrode **21b2(L)** has the extended portion **21b2E2(L)** protruding in the row direction (the right side in FIG. **18****)** in a portion sandwiched between a first portion in which the right edge of the first electrode **21b2(L)** intersects with the slit **22b(L)** and a second portion in which the upper edge of the first electrode **21b2(L)** intersects with the dielectric projection **44b3.**

The extended portion **21a1E1(L)** has an edge parallel to the direction in which the slit **22a(L)** having the extended line intersecting with the edge of the first portion extends (the first direction). The extended portion **21a1E1(L)** has an edge parallel to the column direction. Similarly, the extended portion **21b1E1(L)** has an edge parallel to the direction in which the slit **22b(L)** having the extended line intersecting with the edge of the first portion extends (the second direction). The extended portion **21b1E1(L)** also has an edge parallel to the column direction.

The extended portion **21a2E2(L)** has an edge parallel to the direction in which the slit **22a(L)** intersecting with the edge of the first portion extends (the first direction). The edge and the edge of the slit **22a(L)** are continuous. The extended portion **21a2E2(L)** also has an edge parallel to the row direction. Similarly, the extended portion **21b2E2(L)** has an edge parallel to the direction in which the slit **22b(L)** intersecting with the edge of the first portion extends (the second direction). The edge and the edge of the slit **22b(L)** are continuous. The extended portion **21b2E2(L)** also has an edge parallel to the row direction.

When viewed from the direction perpendicular to the first substrate, the ends in the row direction of these extended portions **21a1E1(L)**, **21a2E2(L)**, **21b1E1(L)**, and **21b2E2(L)** are disposed so as to overlap the black matrix 52(L). Accordingly, even if the alignment of liquid crystal molecules is disturbed in the end portions in the row direction of the extended portions **21a1E1(L), 21a2E2(L), 21b1E1(L),** and **21b2E2(L),** the portions are light-blocked by the black matrix **52(L),** so as not to affect the display. Therefore, as described above by way of the LCD **100K,** the LCD **100L** also can suppress the degradation in display quality caused by the alignment disturbance of liquid crystal molecules in the vicinity of the edges of the first electrodes without providing the above-mentioned auxiliary structure.

It should be understood that, as described above, all of the extended portions may be omitted, and alternatively the region in which the alignment of liquid crystal molecules is disturbed may be light-blocked by using an electrode layer such as the storage capacitor counter electrode **18a(C).** As described above, by providing the extended portions, the effective aperture can be increased.

As described above, according to the first invention and/or the second invention, it is possible to provide an MVA liquid crystal display device which can suppress the degradation in display quality caused by the disturbance in alignment of liquid crystal molecules in the vicinity of the edge of a pixel electrode without providing the above-mentioned auxiliary structure described in Patent Document 1.

### INDUSTRIAL APPLICABILITY

The present invention can be widely applied for MVA liquid crystal display devices.

### REFERENCE SIGNS LIST

- **12**: Gate bus line
- **13**: Source bus line
- **14**: TFT
- **15**: CS bus line
- **16**: Drain lead-out wiring
- **16c**: Storage capacitor electrode
- **17a, 17b**: Contact holes
- **18a, 18b**: Storage capacitor counter electrodes
- **21**: First electrode (pixel electrode)
- **21a, 21b**: First electrodes (sub-pixel electrodes)
- **21aE1, 21aE2, 21bE1, 21bE2**: Extended portions
- **22**: Slits (opening portion), First domain regulating structure
- **22a**: First linear component (slit)
- **22b**: Second linear component (slit)
- **33**: Semiconductor layer
- **44**: Dielectric projection (rib), Second domain regulating structure
- **44a, 44a1, 44a2**: Third linear components (dielectric projections)
- **44b, 44b1, 44b2**: Fourth linear components (dielectric projections)
- **52**: Black matrix
- **62**: Columnar spacer
- **100A - 100L**: Liquid crystal display devices

## Claims

1. An MVA liquid crystal display device comprising a plurality of pixels arranged in a matrix of rows and columns, each of the plurality of pixels including: a first substrate; a second substrate; a vertical-alignment type liquid crystal layer disposed between the first substrate and the second substrate; at least one first electrode formed on the first substrate; a second electrode opposed to the at least one first electrode via the liquid crystal layer; a first domain regulating structure formed on the first substrate; and a second domain regulating structure formed on the second substrate, the first domain regulating structure including a slit formed in the at least one first electrode, and the second domain regulating structure being a slit formed in the second electrode or a dielectric projection formed on the liquid crystal layer side of the second electrode,
the first domain regulating structure having a first linear component extending in a first direction when viewed from a direction perpendicular to the first substrate and a second linear component extending in a second direction which is different from the first direction by about 90°, and the second domain regulating structure having a third linear component extending in the first direction and a fourth linear component extending in the second direction, at least one of the first and second linear components or the third and fourth linear components being plural in number, when viewed from a normal direction of the first substrate, the first linear component and the third linear component being alternately arranged, the second linear component and the fourth linear component being alternately arranged, and
when a voltage is applied across the liquid crystal layer of an arbitrary pixel of the plurality of pixels, four kinds of domains of which tilting azimuths of liquid crystal molecules are mutually different by about 90° being formed between the first linear component and the third linear component and between the second linear component and the fourth linear component, wherein
the first direction and the second direction are directions intersecting with the row direction and the column direction, and
the at least one first electrode has a first corner portion including a first edge parallel to the row direction and a second edge parallel to the column direction, and
the first substrate further includes an electrode layer which overlaps at least part of the first edge and at least part of the second edge of the first corner portion.

2. The liquid crystal display device of claim 1, further comprising a storage capacitor corresponding to each of the plurality of pixels, wherein the storage capacitor includes a storage capacitor electrode electrically connected to the at least one first electrode and a storage capacitor counter electrode opposed to the storage capacitor electrode via an insulating layer, the electrode layer being the storage capacitor counter electrode or the storage capacitor electrode.

3. The liquid crystal display device of claim 1 or 2, further comprising an interlayer insulating layer formed on the storage capacitor electrode, wherein the at least one first electrode is connected to the storage capacitor electrode in a contact hole formed through the interlayer insulating layer on the storage capacitor electrode.

4. The liquid crystal display device of any one of claims 1 to 3, wherein the electrode layer overlaps part of the first domain regulating structure or the second domain regulating structure.

5. The liquid crystal display device of any one of claims 1 to 4, wherein the at least one first electrode has an edge parallel to the first direction or the second direction.

6. The liquid crystal display device of any one of claims 1 to 5, wherein the at least one first electrode has a plurality of slits arranged in one line in the first direction or a plurality of slits arranged in one line in the second direction.

7. The liquid crystal display device of claim 6, wherein a gap between the plurality of slits arranged in one line is less than 8 µm.

8. The liquid crystal display device of any one of claims 1 to 7, wherein the first substrate has a CS bus line for each row,
the at least one first electrode includes two first electrodes having a boundary on the CS bus line and arranged in upper and lower positions along the column direction, and at least one of the two first electrodes has the first corner portion.

9. The liquid crystal display device of claim 8, comprising two storage capacitors corresponding to each of the plurality of pixels, each of the two storage capacitors having a storage capacitor electrode electrically connected to corresponding one of the two first electrodes and a storage capacitor counter electrode opposed to the storage capacitor electrode via an insulating layer, the electrode layer being the storage capacitor counter electrode or the storage capacitor electrode, wherein
a lower edge of the upper one of the two first electrodes has a first protruding portion protruding downwards, an upper edge of the lower one of the two first electrodes has a second protruding portion protruding upwards, and a lower edge of the first protruding portion and an upper edge of the second protruding portion overlap the CS bus line or the storage capacitor counter electrode.

10. The liquid crystal display device of claim 8 or 9, wherein one of the two first electrodes has only one of the plurality of slits arranged in one line along the first direction or the plurality of slits arranged in one line along the second direction, and the other one of the two first electrodes has only the other one of the plurality of slits arranged in one line along the first direction or the plurality of slits arranged in the one line along the second direction.

11. The liquid crystal display device of claim 10, wherein the second domain regulating structure has the third linear component and the fourth linear component of which the respective edges parallel to the row direction are opposed on the CS bus line or the storage capacitor counter electrode, and a gap between the edge of the third linear component and the edge of the fourth linear component is less than 8 µm.

12. The liquid crystal display device of claim 8, wherein the at least one first electrode includes three or four first electrodes, and the three or four first electrodes include the two first electrodes.

13. The liquid crystal display device of claim 12, further comprising three or four storage capacitors corresponding to each of the plurality of pixels, the three or four storage capacitors having a storage capacitor electrode electrically connected to corresponding one of the three or four first electrodes and a storage capacitor counter electrode opposed to the storage capacitor electrode via an insulating layer, wherein
the electrode layer is the storage capacitor electrode electrically connected to corresponding one of the two first electrodes or the storage capacitor counter electrode opposed to the storage capacitor electrode via the insulating layer.

14. The liquid crystal display device of claim 12 or 13, wherein one of the two first electrodes has only one of the plurality of slits arranged in one line along the first direction or the plurality of slits arranged in one line along the second direction, and the other one of the two first electrodes has only the other one of the plurality of slits arranged in one line along the first direction or the plurality of slits arranged in one line along the second direction.

15. The liquid crystal display device of any one of claims 1 to 14, wherein, when viewed from a normal direction of the first substrate, the storage capacitor electrode has a U shape with a concave portion in an up-down direction or a left-right direction.

16. The liquid crystal display device of any one of claims 1 to 15, wherein in a position on the second substrate corresponding to the first edge and the second edge of the first corner portion of the at least one first electrode, the slit formed in the second electrode or the dielectric projection formed on the side of the liquid crystal layer of the second electrode is not formed.
